(19) Europäisches Patentamt
European Patent Office
Office européen des brevets

(11) **EP 4 200 159 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **21766602.3**

(22) Anmeldetag: **20.08.2021**

(51) Internationale Patentklassifikation (IPC):
**B60N 2/02** *(2006.01)*

(52) Gemeinsame Patentklassifikation (CPC):
**B60R 16/037; B60N 2/0021; B60N 2/0025; B60N 2/003; B60N 2/02246; B60N 2/0228; B60N 2/0239; B60N 2/0244; B60N 2/0256; B60N 2/0276; B60N 2/0277; B60N 2/0278; B60N 2/04;** B60N 2210/12; B60N 2210/20; (Forts.)

(86) Internationale Anmeldenummer:
**PCT/EP2021/073174**

(87) Internationale Veröffentlichungsnummer:
**WO 2022/038276 (24.02.2022 Gazette 2022/08)**

(54) **ANTRIEBSVORRICHTUNG ZUM VERSTELLEN EINER INNENRAUMBAUGRUPPE EINES FAHRZEUGS**

DRIVE MECHANISM FOR ADJUSTING AN INTERIOR ASSEMBLY OF A VEHICLE

MÉCANISME D'ENTRAÎNEMENT POUR AJUSTER UN ENSEMBLE INTÉRIEUR D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2020 DE 102020210656**

(43) Veröffentlichungstag der Anmeldung:
**28.06.2023 Patentblatt 2023/26**

(60) Teilanmeldung:
**23201559.4 / 4 292 886**

(73) Patentinhaber: **Brose Fahrzeugteile SE & Co. Kommanditgesellschaft, Bamberg**
**96052 Bamberg (DE)**

(72) Erfinder:
• **HERRMANN, Christian**
  **96269 Großheirath (DE)**
• **KROMER, Alex**
  **96135 Stegaurach (DE)**
• **CZEMPIK, Alexander**
  **04416 Markkleeberg (DE)**
• **POHL, Florian**
  **96237 Ebersdorf (DE)**
• **HORN, Peter**
  **96164 Kemmern (DE)**
• **KELLER, Harald**
  **96167 Königsfeld (DE)**
• **MÜLLER, Alexander**
  **96120 Bischberg (DE)**
• **ROSENTHAL, Markus**
  **96047 Bamberg (DE)**

(74) Vertreter: **Maikowski & Ninnemann Patentanwälte Partnerschaft mbB**
**Postfach 15 09 20**
**10671 Berlin (DE)**

(56) Entgegenhaltungen:
EP-A1- 1 078 808      EP-A2- 1 535 768
DE-A1- 102014 119 628      DE-A1- 19 853 156
US-A1- 2020 139 853

(52) Gemeinsame Patentklassifikation (CPC): (Forts.)
B60N 2210/22; B60N 2210/24; B60N 2230/30

**Beschreibung**

Die Erfindung betrifft eine Antriebsvorrichtung zum Verstellen einer Innenraumbaugruppe eines Fahrzeugs nach dem Oberbegriff des Anspruchs 1.

Eine derartige Antriebsvorrichtung umfasst einen elektromotorischen Verstellantrieb zum Verstellen der Innenraumbaugruppe und eine Steuereinrichtung zum Steuern des Verstellantriebs.

Bei einer Innenraumbaugruppe der hier beschriebenen Art handelt es sich um eine Baugruppe im Innenraum eines Fahrzeugs. Bei einer Innenraumbaugruppe der hier beschriebenen Art kann es sich beispielsweise um einen Fahrzeugsitz, ein Konsolenelement mit einer Aufbewahrungs- oder Ablagefunktion, um einen Monitor, um eine Trennwand oder um eine Ablage wie einen Tisch oder ein Staufach handeln. Die Innenraumbaugruppe ist nicht Bestandteil der Fahrzeugkarosserie und dient insofern nicht zum Abschließen des Fahrzeugs nach außen (wie dies bei einer Fahrzeugtür oder einem Schiebedach der Fall ist). Die Innenraumbaugruppe ist auch nicht Bestandteil eines Antriebs- und Lenkungssystems des Fahrzeugs (wie zum Beispiel eine Lenksäule eines Fahrzeugs) Die Innenraumbaugruppe ist im Innenraum des Fahrzeugs angeordnet und im Innenraum durch einen Nutzer verstellbar, insbesondere um eine Komfortfunktion im Innenraum zur Verfügung zu stellen.

Beispielsweise kann ein Fahrzeugsitz zur Einstellung einer Lehnenneigung, einer Längs- und/oder Querposition oder auch zum Einstellen einer Rotationsstellung im Innenraum verstellbar sein, um einem Fahrzeuginsassen eine bequeme Sitzposition zu ermöglichen. Ein Konsolenelement kann beispielsweise entlang eines Fahrzeugbodens verschiebbar sein, um eine Ablage im Innenraum des Fahrzeugs bereitzustellen oder eine Betätigung einer Funktionsbaugruppe an dem Konsolenelement zu ermöglichen. Ein Monitor kann in seiner Schwenkstellung, seiner Höhenstellung und/oder seiner Neigungsstellung einstellbar sein, um ein komfortables Betrachten des Monitors für einen Fahrzeuginsassen zu ermöglichen.

Insbesondere bei neuen Innenraumkonzepten, zum Beispiel im Zusammenhang mit autonom fahrenden Fahrzeugen, können Innenraumbaugruppen wie Fahrzeugsitze oder Konsolenelemente variabel verstellbar sein, um Fahrzeuginsassen gegebenenfalls ein komfortables Fahren im Fahrzeug zu ermöglichen. Das Verstellen einer Innenraumbaugruppe soll hierbei einfach, komfortabel und intuitiv durch einen Nutzer vorgenommen werden können.

Aus der US 2017/0166089 A1 ist ein Fahrzeugsitz im Innenraum eines Fahrzeugs bekannt, der elektrisch verstellbar ist. Die Verstellung des Fahrzeugsitzes kann unter Verwendung einer Gestensteuerung durch einen Nutzer initiiert werden, beispielsweise indem ein Nutzer eine vorbestimmte Geste im Bereich des Fahrzeugsitzes ausführt und dadurch zum Beispiel ein Verschwenken einer Rückenlehne oder ein Längsverstellen des Fahrzeugsitzes im Fahrzeuginnenraum bewirken kann.

Aus der DE 198 53 156 A1 ist ein Sitz mit zumindest einem Sitz- und/oder Rückenlehnenteil bekannt, welches an einem Sitzträger gehalten und relativ zu dem Sitzträger mittels eines Stellantriebes verstellbar ist. Der Stellantrieb ist mit einem Körperpositionsmesser in Steuerverbindung, um das Sitz- und/oder Rückenlehnenteil an die von einer auf dem Sitz befindlichen Person eingenommene Körperposition anzupassen.

Die EP 1 078 808 A1 offenbart eine Verstelleinrichtung für ein verstellbares Sitzteil eines Kraftfahrzeugsitzes, die einen fremdkraftbetätigten Antrieb aufweist. Der Antrieb kann durch Aktivierungsmittel aktiviert werden, die eine Erfassungseinheit aufweisen, mit der die Einwirkung einer äußeren Kraft auf das Sitzteil entlang einer Verstellrichtung des Sitzteils detektiert werden kann.

Bei einer aus der EP 1 535 768 A2 bekannten Vorrichtung zur Einstellung eines Stellglieds, insbesondere in einem Kraftfahrzeug, ist ein Bedienelement zur Einstellung des Stellglieds betätigbar. Das Stellglied ist durch einen Aktuator und manuell durch das Bedienelement verstellbar, wobei der Aktuator, das Bedienelement und das Stellglied mechanisch gekoppelt sind und eine manuelle Verstellung des Bedienelements durch eine Auswerteeinheit aufgrund von mindestens einem elektrischen Signal des Aktuators sensierbar ist.

Aus der DE 10 2014 119 628 A1 ist ein abschließbares Transportbehältnis für Waffen, insbesondere Langwaffen, bekannt, das ein Gehäuse aufweist, welches an einer Fahrzeugkarosserie über Befestigungsmittel festlegbar ist, die nur bei geöffnetem Transportbehältnis zugänglich sind.

Aufgabe der vorliegenden Erfindung ist es, eine Antriebsvorrichtung zum Verstellen einer Innenraumbaugruppe in einem Fahrzeug zur Verfügung zu stellen, die einem Nutzer ein einfaches, komfortables, intuitives Verstellen der Innenraumbaugruppe ermöglichen kann.

Diese Aufgabe wird durch einen Gegenstand mit den Merkmalen des Anspruchs 1 gelöst.

Bei einer herkömmlichen Innenraumbaugruppe, beispielsweise einem Fahrzeugsitz, erfolgt das Verstellen manuell durch einen Nutzer oder elektromotorisch unter Verwendung einer elektromotorischen Antriebsvorrichtung. Für ein manuelles Verstellen kann beispielsweise eine Verriegelungseinrichtung für eine Längsverstellung eines Fahrzeugsitzes oder für eine Neigungsverstellung einer Rückenlehne entsperrt werden, um auf diese Weise einem Nutzer das Bewegen des Fahrzeugsitzes, beispielsweise zum Einstellen der Längsposition oder zum Einstellen der Neigung der Rückenlehne, zu ermöglichen. Bei einem elektromotorischen Verstellen betätigt ein Nutzer demgegenüber beispielsweise einen Schalter zum Ansteuern einer elektromotorischen Antriebsvorrichtung, die daraufhin zum Beispiel einen Fahrzeugsitz in einem Automatikbetrieb oder bei fortdauernd durch den Nutzer betätigtem Schalter elektromotorisch verstellt, beispielsweise um eine Längsposition des Fahrzeugsitzes einzustellen oder eine Rückenlehne des Fahrzeugsitzes in ihrer Neigung zu verstellen.

Im Vergleich zu herkömmlichen Verstellkonzepten erfolgt gemäß der vorliegenden Erfindung das Verstellen der Innenraumbaugruppe (beispielsweise in Form eines Fahrzeugsitzes, eines Konsolenelements, eines Monitors, einer Trennwand, einer Ablage, eines Staufachs oder dergleichen) grundsätzlich manuell durch einen Nutzer, jedoch bei elektromotorischer Unterstützung durch die Antriebsvorrichtung in einem Servobetrieb. Ein Nutzer muss somit zum Verstellen der Innenraumbaugruppe nicht die vollständige Kraft zur Verfügung stellen, die zum Überwinden von an der Innenraumbaugruppe wirkenden Lasten erforderlich ist, sondern nur eine Teilkraft. Dies ermöglicht ein intuitives, komfortables Verstellen der Innenraumbaugruppe durch einen Nutzer bei elektromotorischer Unterstützung durch die Antriebsvorrichtung. Dies ermöglicht zudem ein schnelles und variables Verstellen bei geringer von einem Nutzer aufzubringender Kraft. Das Verstellen der Innenraumbaugruppe, beispielsweise eines Fahrzeugsitzes, kann somit dadurch bewirkt werden, dass ein Nutzer an der Innenraumbaugruppe angreift und dadurch auf die Innenraumbaugruppe zum Verstellen in eine gewünschte Position einwirkt, wobei der Nutzer zum Verstellen nur eine geringe Kraft aufzubringen hat und eine darüber hinaus erforderliche Kraft durch die elektromotorische Antriebsvorrichtung bereitgestellt wird.

Zusätzlich zu einem solchen Servobetrieb kann auch eine rein elektromotorische Verstellung möglich sein, zum Beispiel in einem Automatikbetreib zum Verstellen zwischen definierten Positionen oder unter dauerhafter Betätigung eines Schalters durch einen Nutzer.

Die Antriebsvorrichtung wird im Servobetrieb zum manuellen, aber elektromotorisch unterstützten Verstellen der Innenraumbaugruppe betrieben. In dem Servobetrieb wird der Verstellantrieb beispielsweise so gesteuert, dass durch den Verstellantrieb eine unterstützende Kraft für eine manuelle Verstellung der Innenraumbaugruppe bereitgestellt und dabei die von einem Nutzer aufzubringende Kraft nach Möglichkeit über den Verstellweg oder einen Teil des Verstellwegs der Innenraumbaugruppe gleich ist oder einer gewünschten Kurve folgt.

In einer Ausgestaltung weist die Antriebsvorrichtung eine Hemmungseinrichtung zum Hemmen einer Verstellbewegung der Innenraumbaugruppe in einer Sperrstellung auf. Die Steuereinrichtung ist hierbei vorzugsweise dazu ausgebildet, zum Verstellen der Innenraumbaugruppe die Hemmungseinrichtung aus der Sperrstellung in eine nicht gesperrte Stellung zu überführen.

Die Hemmungseinrichtung ist dazu vorgesehen, die Innenraumbaugruppe in einer gerade eingenommenen Stellung zu arretieren, wenn kein Verstellen der Innenraumbaugruppe vorgenommen werden soll. Die durch die Hemmungseinrichtung bereitgestellte Hemmung ist hierbei derart zu bemessen, dass die Innenraumbaugruppe sicher und zuverlässig bei auftretenden Belastungskräften in Position gehalten wird. Dies schließt beispielsweise mit ein, dass ein Fahrzeugsitz in einem Crashfall sicher und zuverlässig in Position gehalten werden muss, um ein unzulässiges unkontrolliertes Bewegen des Fahrzeugsitzes in einem Crashfall zu vermeiden und somit eine Verletzungsgefahr für einen Nutzer zu reduzieren. Die Hemmungseinrichtung muss somit gegebenenfalls, beispielsweise bei Ausgestaltung der Innenraumbaugruppe durch einen Fahrzeugsitz, crashfest ausgelegt sein, sodass Crashkräfte aufgenommen und abgeleitet werden können.

Soll demgegenüber die Innenraumbaugruppe verstellt werden, ist die Hemmungseinrichtung freizuschalten, sodass eine an der Innenraumbaugruppe wirkende Hemmung aufgehoben wird und ein manuelles, aber gegebenenfalls im Servobetrieb der Antriebsvorrichtung elektromotorisch unterstütztes Verstellen der Innenraumbaugruppe möglich wird.

Die Antriebsvorrichtung kann beispielsweise ein Getriebe aufweisen, das über den Verstellantrieb angetrieben wird. Über das Getriebe kann beispielsweise ein Abtriebselement angetrieben werden, das mit der Innenraumbaugruppe wirkverbunden ist, sodass über das Abtriebselement eine Verstellkraft in die Innenraumbaugruppe eingeleitet und darüber ein Verstellen der Innenraumbaugruppe bewirkt werden kann. Die Hemmungseinrichtung kann in diesem Fall beispielsweise durch eine Bremse ausgestaltet sein, die mit dem Abtriebselement wirkverbunden ist und in der Sperrstellung das Abtriebselement (mittelbar oder unmittelbar) sperrt, sodass das Abtriebselement in der gesperrten Stellung der Verriegelungseinrichtung nicht ohne weiteres, jedenfalls nicht ohne Aufheben der Hemmung, verstellt werden kann und die mit dem Abtriebselement wirkverbundene Innenraumbaugruppe somit über die Hemmungseinrichtung in Position gehalten wird. Soll die Innenraumbaugruppe verstellt werden, kann die Hemmungseinrichtung aus der Sperrstellung in die nicht gesperrte Stellung freigeschaltet werden, sodass ein Verstellen des Abtriebselements möglich ist.

Der durch einen Elektromotor verwirklichte Verstellantrieb kann, bei Vorsehen einer solchen Hemmungseinrichtung, insbesondere nicht selbsthemmend ausgestaltet sein, sodass der Verstellantrieb das Abtriebselement in nicht bestromtem Zustand selbst nicht feststellt und somit auch die Innenraumbaugruppe nicht in Position hält. Die Arretierung der Innenraumbaugruppe wird vielmehr durch die Hemmungseinrichtung übernommen, die in der Sperrstellung die Innenraumbaugruppe so feststellt, dass beispielsweise Crashkräfte sicher und zuverlässig aufgenommen werden können. Ist die Hemmungseinrichtung freigeschaltet, kann die Innenraumbaugruppe manuell durch einen Nutzer verstellt werden, wobei über die Antriebsvorrichtung im Servobetrieb eine unterstützende Kraft bereitgestellt wird und somit das Verstellen der Innenraumbaugruppe durch einen Nutzer mit vergleichsweise geringer Nutzerkraft erfolgen kann.

Die Innenraumbaugruppe kann beispielsweise um eine Schwenkachse verschwenkbar und/oder entlang einer Längsrichtung verschiebbar sein. Ist die Innenraumbaugruppe zum Beispiel durch einen Fahrzeugsitz ausgestaltet, so kann der Fahrzeugsitz insgesamt entlang eines Fahrzeugbodens verstellbar sein, beispielsweise entlang einer Fahrzeuglängsrichtung und/oder entlang einer Fahrzeugquerrichtung. Zudem kann der Fahrzeugsitz um eine Fahrzeugvertikalrichtung drehbar sein, sodass auch die Drehstellung des Fahrzeugsitzes im Fahrzeuginnenraum angepasst werden kann. Zudem sind gegebenenfalls Baugruppen des Fahrzeugsitzes, wie zum Beispiel ein Rückenlehnenteil oder eine Sitzfläche, verstellbar, beispielsweise um eine Neigungsstellung anzupassen.

Eine analoge Verstellbarkeit kann auch an anderen Innenraumbaugruppen wie zum Beispiel an einem Konsolenelement vorgesehen sein. Ein Konsolenelement kann zum Beispiel entlang eines Fahrzeugbodens verschiebbar sein, wobei gegebenenfalls auch eine Höhenstellung des Konsolenelements oder eine Drehstellung anpassbar sein kann. Ein Monitor kann beispielsweise in seiner Schwenkstellung, seiner Drehstellung, seiner Höhenstellung und in seiner Neigung veränderbar sein.

Die Verstellbewegungen der Innenraumbaugruppe insgesamt oder von einzelnen (Unter-) Baugruppen der Innenraumbaugruppe können durch ein oder mehrere Antriebsvorrichtungen bewirkt werden, wobei das Verstellen manuell durch einen Nutzer vorgenommen und elektromotorisch durch eine jeweilige Antriebsvorrichtung unterstützt wird.

In einer Ausgestaltung weist die Innenraumbaugruppe ein Bedienelement auf, das durch einen Nutzer zum Verstellen der Innenraumbaugruppe betätigt werden kann. Ein solches Bedienelement kann beispielsweise durch einen mechanisch zu betätigenden Taster ausgebildet sein. Das Bedienelement kann unmittelbar an der Innenraumbaugruppe angeordnet sein, kann gegebenenfalls aber auch räumlich von der Innenraumbaugruppe entfernt, aber der Innenraumbaugruppe zugeordnet sein. Ein Initiieren eines Verstellvorgangs kann hierbei dadurch erfolgen, dass ein Nutzer das Bedienelement zum Beispiel drückt und sodann das Verstellen der Innenraumbaugruppe manuell, im Servobetrieb der Antriebsvorrichtung aber elektromotorisch unterstützt erfolgt. Denkbar kann sein, dass ein Nutzer das Bedienelement fortwährend während eines Verstellvorgangs betätigen muss und ein Verstellen der Innenraumbaugruppe solange möglich ist, bis die Betätigung des Bedienelements beendet wird. Denkbar ist aber auch, dass das Bedienelement nur einmal durch den Nutzer zu betätigen ist und dadurch ein Verstellmodus gestartet wird, innerhalb dessen ein servounterstütztes Verstellen der Innenraumbaugruppe möglich ist.

Zusätzlich oder alternativ zu einem solchen Bedienelement kann die Innenraumbaugruppe eine Sensoreinrichtung zum Erfassen einer Berührung, einer Annäherung, einer Beschleunigung und/oder einer Bewegungsgeschwindigkeit an der Innenraumbaugruppe aufweisen, wobei die Steuereinrichtung ausgebildet ist, ein Erfassungssignal der Sensoreinrichtung zum Erkennen eines Verstellwunsches eines Nutzers auszuwerten.

Ist die Sensoreinrichtung zum Erfassen einer Berührung ausgestaltet, so ist die Sensoreinrichtung beispielsweise durch einen taktilen Berührungssensor, beispielsweise einen Drucksensor oder dergleichen, verwirklicht.

Ist die Sensoreinrichtung zum Erfassen einer Annäherung ausgestaltet, so ist die Sensoreinrichtung durch einen Annäherungssensor, zum Beispiel einen kapazitiven Sensor, verwirklicht, der eine Annäherung eines Nutzers, zum Beispiel eines Körperteils wie der Hand eines Nutzers, erfassen kann, um bei Annäherung ein Erfassungssignal zu erzeugen.

Eine Sensoreinrichtung in Form eines Berührungssensors oder eines Annäherungssensors kann insbesondere ein Angreifen eines Nutzers an der Innenraumbaugruppe in einem bestimmten Bereich, zum Beispiel im Bereich einer Rückenlehne, erfassen. Legt ein Nutzer beispielsweise seine Hand auf einen der Sensoreinrichtung zugeordneten Bereich der Innenraumbaugruppe, beispielsweise der Rückenlehne eines Fahrzeugs, so kann dies als Verstellwunsch interpretiert werden, um einem Nutzer das Verstellen der Innenraumbaugruppe zu ermöglichen.

Ist die Sensoreinrichtung zum Erfassen einer Beschleunigung an der Innenraumbaugruppe ausgestaltet, kann die Sensoreinrichtung beispielsweise als an der Innenraumbaugruppe angeordneter Beschleunigungssensor ausgestaltet sein, der ein von einer Beschleunigung der Innenraumbaugruppe abhängiges Messsignal ausgibt.

Ist die Sensoreinrichtung zum Erfassen einer Bewegungsgeschwindigkeit an der Innenraumbaugruppe ausgestaltet, so ist die Sensoreinrichtung beispielsweise durch einen Gyrosensor ausgestaltet, der insbesondere eine Drehbewegung einer Innenraumbaugruppe erfassen kann.

Die Sensoreinrichtung, zum Beispiel in Form eines Annäherungssensors, eines Berührungssensors, eines Beschleunigungssensors oder eines Geschwindigkeitssensors, kann beispielsweise auch zum Bereitstellen einer weiteren Funktion an der Innenraumbaugruppe, zum Beispiel zum Zwecke einer Hinderniserkennung, eines Kollisionsschutzes oder eines Einklemmschutzes genutzt werden.

Zusätzlich oder alternativ kann eine Innenraumüberwachungseinrichtung - zum Beispiel in Form einer Kamera, eines Radarsystems oder eines Lidarsystems - vorgesehen sein, mittels derer eine Bewegung eines Nutzers im Innenraum des Fahrzeugs erfasst werden kann. Ein Erfassungssignal der Innenraumüberwachungseinrichtung kann durch die Steuereinrichtung ausgewertet werden, um einen Verstellwunsch eines Nutzers zu erkennen.

Über eine Innenraumüberwachungseinrichtung kann beispielsweise eine virtuelle Bedienfläche im Bereich der Innenraumbaugruppe definiert und überwacht werden. Wird über die Innenraumüberwachungseinrichtung erkannt, dass ein Nutzer an der virtuellen Bedienfläche angreift, so kann dies als Verstellwunsch interpretiert werden, um ein Initiieren des Verstellens der Innenraumbaugruppe zu bewirken.

Eine Bewegung eines Körperteils eines Nutzers kann hierbei beispielsweise durch bildgebende Verfahren und bildgestützte Auswertung von erfassten Signalen erfolgen.

Beispielsweise können Bilder einer Kamera ausgewertet werden, um eine Nutzerbewegung zu erfassen und zu interpretieren.

Auch die Innenraumüberwachungseinrichtung kann - analog wie die Sensoreinrichtung - zum Bereitstellen einer weiteren Funktion an der Innenraumbaugruppe, zum Beispiel zum Zwecke einer Hinderniserkennung, eines Kollisionsschutzes oder eines Einklemmschutzes genutzt werden.

Mehrere (unterschiedliche) Sensoreinrichtungen und/oder eine Überwachungseinrichtung können gegebenenfalls miteinander kombiniert werden, um Erfassungssignale der unterschiedlichen Einrichtungen in kombinierter Weise insbesondere zum Erkennen eines Verstellwunsches auszuwerten.

Generell ist ein Verstellwunsch eines Nutzers zu unterscheiden von Situationen, in denen keine Verstellung erfolgen soll. So kann eine bestimmte Bewegung eines Nutzers beispielsweise auf einen Verstellwunsch hindeuten, während in anderen Situationen, beispielsweise bei im Fahrzeuginnenraum bei Fahrt des Fahrzeugs befindlichen Fahrzeuginsassen, gerade keine Verstellung der Innenraumbaugruppe erfolgen soll. Ein durch eine Sensoreinrichtung oder eine Innenraumüberwachungseinrichtung erfasstes Signal ist somit auszuwerten, um insbesondere eine Bedienung eines Nutzers zum Verstellen der Innenraumbaugruppe zu unterscheiden von beispielsweise einer Bewegung des Nutzers oder eines anderen Objekts im Fahrzeuginnenraum, die keinem Verstellwunsch entspricht.

Beispielsweise kann zum Initiieren eines Verstellvorgangs eine vorbestimmte Nutzergeste erforderlich sein. Entsprechend kann die Steuereinrichtung, in einer Ausgestaltung, dazu ausgebildet sein, ein Erfassungssignal einer Sensoreinrichtung oder einer Innenraumüberwachungseinrichtung zum Erkennen einer vorbestimmten Geste auszuwerten, um bei Erkennen der vorbestimmten Geste auf einen Verstellwunsch zu schließen. Ist die Sensoreinrichtung beispielsweise als kapazitiver Sensor ausgebildet oder wird eine Innenraumüberwachungseinrichtung verwendet, so kann über die Sensoreinrichtung oder die Innenraumüberwachungseinrichtung eine vorbestimmte Geste eines Nutzers erkannt werden, beispielsweise eine Bewegung eines Körperteils mit einem bestimmten Bewegungsmuster, beispielsweise eine Bewegung in eine bestimmte Richtung im Bereich der Innenraumbaugruppe und/oder mit einer bestimmten Bewegungsgeschwindigkeit.

Beispielsweise kann zum Initiieren eines Verstellvorgangs der Innenraumbaugruppe vorgesehen sein, dass ein Nutzer mit seiner Hand mit einem bestimmten Muster auf die Innenraumbaugruppe einwirkt. Beispielsweise kann vorgesehen sein, dass der Nutzer mit seiner flachen Hand eine vorbestimmte Anzahl von Malen, zum Beispiel zweimal, auf die Innenraumbaugruppe zu klopfen hat, was durch eine oder mehrere Sensoreinrichtungen und/oder die Innenraumüberwachungseinrichtung erfasst und als Verstellwunsch interpretiert wird. Zusätzlich oder alternativ kann vorgesehen sein, dass der Nutzer in bestimmter Weise an der Innenraumbaugruppe angreift und dadurch beispielsweise mehrere Sensoreinrichtungen auslöst, um einen Verstellwunsch zu signalisieren.

Zusätzlich oder alternativ kann ein Verstellmodus zum Beispiel über ein zentrales Bedienelement in einem Fahrzeug gestartet werden, zum Beispiel über einen Bordcomputer an einer Mittelkonsole, über eine Kommunikationseinrichtung wie ein Mobiltelefon oder dergleichen.

Ein Verstellmodus, innerhalb dessen ein Verstellen der Innenraumbaugruppe in servounterstützter Weise durch einen Nutzer möglich ist, kann zum Beispiel nach einer vorbestimmten Zeit wieder beendet werden. Alternativ kann eine Beendigung des Verstellmodus nach einer vorbestimmten Zeit nach einer Verstellaktion beendet werden. Wiederum alternativ kann der Verstellmodus nach Beendigung der Betätigung eines Bedienelements beendet werden. Wiederum alternativ kann eine Beendigung des Verstellmodus auch durch aktive Betätigung eines Bedienelements erfolgen, beispielsweise indem ein Schalter abgeschaltet wird.

Bei Beendigung des Verstellmodus kann eine Hemmungseinrichtung, die bei Initiierung des Verstellmodus freigeschaltet worden ist, beispielsweise wieder in die Sperrstellung überführt werden, sodass die zugeordnete Innenraumbaugruppe festgestellt wird und nicht weiter verstellbar ist.

Bei einem Übergang von dem Servobetrieb in eine (wiederum) arretierte Stellung der Innenraumbaugruppe kann in einen Zwischenzustand eine Positionsregelung zum (elektromotorischen) Halten der Innenraumbaugruppe in der gerade eingenommenen Position erfolgen. Im Servobetrieb verstellt ein Nutzer eine jeweilige Innenraumbaugruppe manuell unter elektromotorischer Servounterstützung der Verstellung, wobei nach Beendigung der Verstellung die Antriebsvorrichtung in einen Haltemodus geschaltet wird, in dem die Innenraumbaugruppe zum Beispiel strombehaftet durch Regelung des Verstellantriebs in Position gehalten wird. Anschließend wird beispielsweise die Hemmungseinrichtung in die Sperrstellung geschaltet, sodass die Innenraumbaugruppe stromlos gesperrt und in Position gehalten ist.

In einer Ausgestaltung ist die Steuereinrichtung dazu ausgebildet, den Verstellmodus zum Verstellen der Innenraumbaugruppe im Servobetrieb in Abhängigkeit von zumindest einem Triggerkriterium zu aktivieren. Generell wird der Servobetrieb beispielsweise nicht stets zur Verfügung gestellt, sodass ein Verstellen der Innenraumbaugruppe nicht stets möglich ist, sondern nur in bestimmten Situationen. Hierzu wertet die Steuereinrichtung ein oder mehrere Triggerkriterien aus, um in Abhängigkeit von den Triggerkriterien zu bestimmen, ob der Verstellmodus zum Bereitstellen des Servobetriebs aktiviert werden soll oder nicht.

Dadurch, dass der Verstellmodus zum Bereitstellen des Servobetriebs in Abhängigkeit von einem oder mehreren Triggerkriterien gestartet wird, kann gegebenenfalls eine Sensorik zum Initiieren des Servobetriebs und zum Erkennen eines Verstellwunsches vereinfacht werden. So kann bei Aktivieren des Verstellmodus beispielsweise eine Hemmungseinrichtung entsperrt werden, sodass die Antriebsvorrichtung zum Verstellen der Innenraumbaugruppe in einen solchen Zustand versetzt wird, in dem ein Verstellen händisch durch einen Nutzer möglich ist. Ist der Verstellmodus gestartet worden, kann ein Nutzer beispielsweise an der Innenraumbaugruppe angreifen und diese bewegen, wobei eine solche Bewegung in einfacher Weise anhand der Verstellbewegung der Innenraumbaugruppe erkannt werden kann, um sodann den eigentlichen Servobetrieb zum servounterstützten Verstellen der Innenraumbaugruppe zu initiieren und im Servobetrieb eine Motorkraft zur Verfügung zu stellen, die das Verstellen der Innenraumbaugruppe in elektromotorischer Weise unterstützt.

Bei einem Triggerkriterium kann es sich beispielsweise um einen Belegungszustand der Innenraumbaugruppe handeln. Handelt es sich bei der Innenraumbaugruppe beispielsweise um einen Fahrzeugsitz oder eine Baugruppe eines Fahrzeugsitzes, beispielsweise die Rückenlehne eines Fahrzeugsitzes, so stellt die Steuereinrichtung den Verstellmodus zum Verstellen im Servobetrieb beispielsweise nur dann zur Verfügung, wenn der Fahrzeugsitz nicht durch einen Fahrzeuginsassen belegt ist. Beispielsweise nur bei leerem Fahrzeugsitz soll die Rückenlehne zu verstellen sein. Der Belegungszustand kann hierbei beispielsweise anhand eines (kapazitiven) Belegungssensors, anhand des Zustands eines Gurtschlosses oder auch durch eine Innenraumüberwachungseinrichtung ausgewertet werden.

Bei einem anderen Triggerkriterium kann es sich um den Öffnungszustand einer Fahrzeugtür, insbesondere einer Fahrzeugseitentür oder einer Heckklappe, handeln. Beispielsweise kann die Steuereinrichtung dazu ausgebildet sein, den Verstellmodus zum Bereitstellen des Servobetriebs zu aktivieren, sobald eine Fahrzeugseitentür geöffnet wird. Wird beispielsweise die rechte, hintere Fahrzeugseitentür geöffnet, so kann der Verstellmodus zum Bereitstellen des Servobetriebs für einen Fahrzeugsitz rechts hinten und/oder rechts vorne gestartet werden. Wird demgegenüber die linke, hintere Fahrzeugseitentür geöffnet, so wird beispielsweise der Verstellmodus zum Bereitstellen des Servobetriebs für einen Fahrzeugsitz links hinten und/oder links vorne gestartet. Wird festgestellt, dass die Heckklappe geöffnet wird, so kann der Verstellmodus beispielsweise für eine hinterste Sitzreihe in einem Fahrzeug gestartet werden.

Als zusätzliches Kriterium kann ein Fahrzustand des Fahrzeugs ausgewertet werden. So kann der Verstellmodus beispielsweise nur bei Stillstand des Fahrzeugs möglich sein. Alternativ kann der Verstellmodus bei Stillstand des Fahrzeugs, gegebenenfalls aber auch bei Fahrt aktiviert werden. Bei Fahrt des Fahrzeugs kann hierbei situationsabhängig der Verstellmodus unterbunden werden, beispielsweise abhängig von der Fahrtgeschwindigkeit des Fahrzeugs oder bei einer sogenannten "Precrash"-Warnung, die auf einen möglicherweise drohenden Crash hinweist. Befindet sich die Antriebsvorrichtung bei einer solchen "Precrash"-Warnung gerade im Verstellmodus, so kann der Verstellmodus abgeschaltet und die Innenraumbaugruppe in ihrer gerade eingenommenen Position arretiert werden, um gegebenenfalls Crashkräfte aufnehmen und ableiten zu können.

In einer Ausgestaltung ist die Steuereinrichtung dazu ausgebildet, bei oder nach Aktivierung des Verstellmodus den Verstellantrieb mit einem pulsweitenmodulierten Bestromungssignal anzusteuern. Wird der Verstellmodus in Abhängigkeit von einem oder mehreren Triggerkriterien gestartet, so wird beispielsweise eine Hemmungseinrichtung entsperrt und somit die Innenraumbaugruppe aus einer arretierten, festgestellten Stellung in einen solchen Zustand gebracht, in dem ein Bewegen der Innenraumbaugruppe möglich ist. Zu Beginn des Verstellmodus steuert die Steuereinrichtung hierbei den Verstellantrieb mit einem pulsweitenmodulierten Signal so an, dass beispielsweise die Innenraumbaugruppe elektromotorisch durch den Verstellantrieb in Position gehalten wird und somit beispielsweise die Wirkung der Schwerkraft ausgeglichen wird.

Die Bestromung mit dem pulsweitenmodulierten Bestromungssignal kann, in einer Ausgestaltung, so niedrigenergetisch erfolgen, dass sich die Innenraumbaugruppe noch nicht bewegt. Alternativ kann die Bestromung so erfolgen, dass sich der Verstellantrieb und entsprechend auch die Innenraumbaugruppe zum Beispiel langsam in eine Bewegungsrichtung zu bewegen beginnt. Greift ein Nutzer an der Innenraumbaugruppe an und verstellt diese manuell, so erfolgt die eigentliche Servounterstützung im Servobetrieb dadurch, dass eine unterstützende Kraft durch den Verstellantrieb zum Unterstützen der Verstellbewegung zur Verfügung gestellt wird.

Die pulsweitenmodulierte Bestromung zu Beginn des Verstellmodus kann beispielsweise derart erfolgen, dass der Verstellantrieb wechselseitig in die eine und die andere Bewegungsrichtung bestromt wird, beispielsweise für eine vorbestimmte Zeitspanne in die eine Richtung und für die gleiche Zeitspanne oder eine andere Zeitspanne in die andere Richtung. Das pulsweitenmodulierte Bestromungssignal kann sich hierbei abhängig von der Bewegungsrichtung in seiner Leistung unterscheiden.

Die Leistung eines pulsweitenmodulierten Bestromungssignals kann als Parameter vorgegeben sein, kann anhand einer Kalibrierung bei Fertigung eingemessen und vorgegeben sein oder kann bei jedem Verstellvorgang, also bei Aktivieren des Verstellmodus, jeweils adaptiv festgelegt werden.

In einer Ausgestaltung ist die Steuereinrichtung dazu ausgebildet, den Verstellantrieb in dem Verstellmodus zum Bereitstellen einer unterstützenden Kraft bei einer manuellen Verstellung der Innenraumbaugruppe durch einen Nutzer anzusteuern, wenn nach dem Aktivieren des Verstellmodus ein Verstellwunsch eines Nutzers erkannt wird. Ist die Antriebsvorrichtung in den Verstellmodus geschaltet worden, in dem beispielsweise eine Hemmungseinrichtung entsperrt ist und zudem der Verstellantrieb mit einem pulsweitenmodulierten Bestromungssignal initial bestromt wird, so erfolgt die servounterstützte Verstellung, sobald erkannt wird, dass ein Nutzer die Innenraumbaugruppe bewegt. Eine solche Bewegung kann zum Beispiel anhand einer Sensorik an der Innenraumbaugruppe, zum Beispiel durch eine Anordnung von Hallsensoren oder dergleichen, erkannt werden.

Alternativ zum Starten der servounterstützten Verstellung im Servobetrieb anhand einer einfachen Bewegungserkennung der Innenraumbaugruppe wird, in anderer Ausgestaltung, der Servobetrieb erst dann gestartet, wenn ein vorbestimmtes Nutzerereignis identifiziert wird. Beispielsweise wird die Servounterstüzung im Servobetrieb erst dann initiiert, wenn zum Beispiel eine Rüttelbewegung an dem Fahrzeugsitz, mit einem Bewegungsintervall zum Beispiel abweichend von einem Bestromungsintervall oder im Takt des Bestromungsintervalls (bei alternierender Bestromung in unterschiedliche Bewegungsrichtungen), erkannt wird. In einem anderen Beispiel wird die Servounterstützung im Servobetrieb dann initiiert, wenn eine vorbestimmte Impulskraft, im Sinne eines Anstupsens, an der Innenraumbaugruppe, erkannt wird.

In einer Ausgestaltung ist die Steuereinrichtung dazu ausgebildet, nach dem Aktivieren des Verstellmodus ein Hinweissignal als Hinweis auf den Verstellmodus zum Ausgeben an einen Nutzer zu erzeugen. So kann die Steuereinrichtung beispielsweise ein Hinweissignal erzeugen, das über eine Fahrzeugeinrichtung, wie zum Beispiel ein Audiosystem des Fahrzeugs, ausgegeben wird, um dem Nutzer zu signalisieren, dass der Verstellmodus zum Verstellen gestartet worden ist. Alternativ kann das Hinweissignal darin bestehen, dass die Steuereinrichtung den Verstellantrieb zum Verfahren der Innenraumbaugruppe zum Beispiel mit einer langsamen Bewegungsgeschwindigkeit oder durch Erzeugen einer Vibrationsbewegung an der Innenraumbaugruppe in einer für den Nutzer wahrnehmbaren Weise ansteuert. Wiederum alternativ kann die Steuereinrichtung beispielsweise ein solches moduliertes Bestromungssignal erzeugen und an den Verstellantrieb abgeben, dass der Verstellantrieb zu einer vorbestimmten Geräuscherzeugung, zum Beispiel zum Erzeugen von Musik, angeregt wird. Der Verstellantrieb wird somit derart bestromt, dass ein Signal im hörbaren Bereich an dem Verstellantrieb erzeugt wird.

Der Verstellantrieb kann beispielsweise als Gleichstrommotor, besonders vorteilhaft als bürstenloser Gleichstrommotor ausgebildet sein.

Die Steuereinrichtung kann in den Verstellantrieb integriert sein, kann aber auch separat vom Verstellantrieb ausgebildet sein, beispielsweise durch ein Sitzsteuergerät oder ein Zentralsteuergerät in dem Fahrzeug.

Gemäß der Erfindung weist die Steuereinrichtung ein Servoregelungsmodul zum Bestimmen eines Sollwerts in Abhängigkeit von einer an der Innenraumbaugruppe wirkenden Last auf. Die Steuereinrichtung kann zudem beispielsweise ein Stromregelungsmodul zum Regel eines Stroms des Verstellantriebs aufweisen, das ausgebildet ist, den Strom des Verstellantriebs anhand des von dem Servoregelungsmodul zugeführten Sollwerts zu regeln.

Im Servobetrieb erfolgt demgemäß eine Stromregelung der Antriebsvorrichtung, wobei einem Stromregelungsmodul ein von dem Servoregelungsmodul generierter Sollwert zugeführt und die Stromregelung anhand des von dem Stromregelungsmodul erhaltenen Sollwerts im Stromregelungsmodul erfolgt. Das Servoregelungsmodul ist hierbei dazu ausgestaltet, den Sollwert so einzustellen, dass die vom Verstellantrieb bereitgestellte Kraft den Nutzer in der Bewegung der Innenraumbaugruppe derart unterstützt, dass die vom Nutzer aufzubringende Kraft nach Möglichkeit zumindest näherungsweise gleich ist (oder einer gewünschten Kurve folgt) und sich für den Nutzer somit eine komfortable, haptisch angenehme Verstellung der Innenraumbaugruppe ergibt.

In einer Ausgestaltung weist die Steuereinrichtung zusätzlich ein Lastberechnungsmodul auf, das dem Servoregelungsmodul vorgeschaltet ist und dazu dient, eine an der Innenraumbaugruppe wirkende Last zu bestimmen. Bei der Last handelt sich um eine unabhängig von einer aufgebrachten Nutzerkraft an der Innenraumbaugruppe wirkende Kraft, die insbesondere einem Verstellen der Innenraumbaugruppe entgegenwirken (oder die Bewegung der Innenraumbaugruppe gegebenenfalls auch unterstützen) und beispielsweise von der Fahrzeuglage, einer Verstellrichtung der Innenraumbaugruppe und einer aktuellen Verstellposition der Innenraumbaugruppe abhängen kann.

Das Lastberechnungsmodul kann insbesondere dazu ausgestaltet sein, eine an der Innenraumbaugruppe wirkende statische und/oder dynamische Last zu bestimmen. Die Last kann beispielsweise in Abhängigkeit von einem um eine Fahrzeuglängsachse gemessenen Neigungswinkel des Fahrzeugs, einem um die Fahrzeuglängsachse gemessenen Neigungswinkel einer Schwenkachse der Innenraumbaugruppe, einem um eine Fahrzeugquerachse gemessenen Steigungswinkel des Fahrzeugs, einem um die Fahrzeugquerachse gemessenen Steigungswinkel der Schwenkachse der Innenraumbaugruppe und/oder einem Öffnungswinkel der Innenraumbaugruppe bestimmt werden.

In Abhängigkeit von der Neigung des Fahrzeugs (gemessen um die Fahrzeuglängsachse, auch bezeichnet als Rollwinkel) und/oder in Abhängigkeit von der Steigung des Fahrzeugs (gemessen um die Fahrzeugquerachse, auch bezeichnet als Nickwinkel oder Pitchwinkel) wirken Schwerkräfte auf die Innenraumbaugruppe. Solche Schwerkräfte können beispielsweise in Richtung einer gewünschten Verstellbewegung oder entgegengesetzt zur Verstellbewegung wirken. Wirkt die Schwerkraft dem Verstellen entgegen, muss ein Nutzer bei einem Verstellen der Innenraumbaugruppe zum Beispiel entgegen einer aufgrund der Schwerkraft an der Innenraumbaugruppe wirkenden Kraft arbeiten, wobei die durch den Verstellantrieb bereitgestellte, unterstützende Kraft vorzugsweise so eingestellt werden soll, dass die vom Nutzer aufzubringende Kraft unabhängig von der Lage des Fahrzeugs und von der Position der Innenraumbaugruppe gleich bleibt oder einer gewünschten Kurve folgt. Die vom Verstellantrieb bereitzustellende, unterstützende Kraft verändert sich somit mit der Fahrzeuglage und der Position und Verstellrichtung der Innenraumbaugruppe und wird entsprechend so vorgegeben, dass sich für einen Nutzer vorzugsweise eine zumindest näherungsweise gleichbleibende Verstellkraft im Servobetrieb ergibt.

Zusätzlich können Reibkräfte an der Innenraumbaugruppe wirken, die ebenfalls durch das Lastberechnungsmodul zum Berechnen der an der Innenraumbaugruppe wirkenden Last mit einbezogen werden können.

In einer Ausgestaltung ist das Servoregelungsmodul dazu ausgebildet, anhand der an der Innenraumbaugruppe wirkenden Last, wie sie vom Lastberechnungsmodul berechnet und dem Servoregelungsmodul zugeführt wird, und zusätzlich anhand eines von einem Nutzer aufzubringenden Zielkraftwerts eine durch den Verstellantrieb bereitzustellende Sollkraft zu bestimmen. Der Zielkraftwert entspricht der gewünschten Kraft, die ein Nutzer beim Verstellen der Innenraumbaugruppe aufzubringen hat. Durch das Servoregelungsmodul soll der Sollwert für die Stromregelung so vorgegeben werden, dass der Verstellantrieb eine Kraft bereitstellt, die den Nutzer beim Verstellen der Innenraumbaugruppe derart unterstützt, dass der Nutzer zumindest näherungsweise nur eine dem Zielkraftwert entsprechende Nutzerkraft aufzubringen hat.

Die Last, die durch das Lastberechnungsmodul berechnet wird, kann einen statischen Anteil und einen dynamischen Anteil aufweisen. So kann die Last bestimmt werden anhand einer an der Innenraumbaugruppe wirkenden, statischen Lastkraft und einer an der Innenraumbaugruppe wirkenden, dynamischen Lastkraft. Die statische Lastkraft kann sich ergeben aus Kraftanteilen, die sich aus der Schwerkraftwirkung auf die Innenraumbaugruppe in Abhängigkeit vom Neigungswinkel und vom Steigungswinkel des Fahrzeugs und zusätzlich aus einer an der Innenraumbaugruppe insbesondere in der Verstellmechanik wirkenden Reibkraft ergeben. Die dynamische Lastkraft kann demgegenüber zum Beispiel aus Trägheitskräften resultieren und bemisst sich somit anhand der Trägheit der Innenraumbaugruppe und einer Beschleunigung der Innenraumbaugruppe.

Sind die statische Lastkraft und die dynamische Lastkraft bekannt, kann die durch den Verstellantrieb bereitzustellende Sollkraft anhand einer Kraftbilanz berechnet werden zu

$$F_{Soll} = F_{stat} + F_{dyn} - F_{user},$$

wobei $F_{Soll}$ die Sollkraft, $F_{stat}$ die statische Lastkraft, $F_{dyn}$ die dynamische Lastkraft und $F_{user}$ die Nutzerkraft angibt. Die statische Lastkraft und die dynamische Lastkraft gehen hierbei positiv in die Kraftbilanz ein. Die von einem Nutzer aufzubringende Nutzerkraft geht demgegenüber je nach Bewegungsrichtung positiv oder negativ in die Bilanz ein. Die Sollkraft gibt die vom Verstellantrieb bereitzustellende Kraft an, die der insgesamt zum Verstellen der Innenraumbaugruppe erforderlichen Kraft abzüglich der Nutzerkraft entspricht.

Anhand der Sollkraft bestimmt das Servoregelungsmodul dann, in einer Ausgestaltung, den Sollwert und führt diesen Sollwert im Servobetrieb dem Stromregelungsmodul zu. Im Stromregelungsmodul erfolgt eine Stromregelung anhand des durch das Servoregelungsmodul bereitgestellten Sollwerts.

In einer Ausgestaltung ist das Stromregelungsmodul dazu ausgebildet, den Strom des Verstellantriebs unter Verwendung einer Pulsweitenmodulation einzustellen. Im Stromregelungsmodul erfolgt eine Stromregelung anhand des jeweils zugeführten, vom Betriebsmodus abhängigen Sollwerts. Das Stromregelungsmodul gibt eine Stellgröße aus, anhand derer die dem Verstellantrieb zugeführte Spannung mit einer Pulsweitenmodulation hoher Frequenz, zum Beispiel mit einer Frequenz zwischen 5 kHz und 100 kHz oder gar darüber eingestellt wird.

Im Stromregelungsmodul erfolgt eine Regelung anhand des jeweils zugeführten Sollwerts und des sich ergebenden, tatsächlich Motorstroms. Der Strom des Verstellantriebs wird durch Regelung somit so eingestellt, dass er dem Sollwert entspricht.

Durch die elektromotorische Unterstützung des manuellen Verstellens der Innenraumbaugruppe im Servobetriebsmodus mittels Stromregelung kann die von einem Nutzer aufzubringende Kraft auf einen gewünschten Zielkraftwert eingestellt werden, wobei die Regelung derart erfolgen kann, dass die vom Nutzer aufzubringende Kraft über den Verstellweg der Innenraumbaugruppe zumindest näherungsweise gleich bleibt oder einer gewünschten Kurve folgt. Ein manuelles Verstellen der Innenraumbaugruppe im Servobetriebsmodus durch einen Nutzer kann somit einfach, komfortabel und haptisch angenehm erfolgen.

Im Servobetriebsmodus folgt das Bereitstellen der unterstützenden Kraft der Bewegung eines Nutzers, wobei insbesondere ein ungewünschtes Nachlaufen, d. h. ein weiteres Verstellen nach Beendigung einer Nutzerbetätigung, vermieden werden kann. Der Nutzer ist in der Wahl der Verstellgeschwindigkeit frei. Über den Verstellantrieb wird lediglich eine unterstützende Kraft bereitgestellt, die abhängig von der Verstellbewegung der Innenraumbaugruppe durch einen Nutzer variabel eingestellt wird.

Im Servobetrieb kann ein Verstellen einer oder mehrere Verstellebenen einer oder mehrere Innenraumbaugruppen gleichzeitig erfolgen. Beispielsweise kann an einem Fahrzeugsitz für eine oder mehrere Antriebsvorrichtungen gleichzeitig eine Selbsthemmung aufgehoben und ein Verstellvorgang im Servobetrieb eingeleitet werden, um den Fahrzeugsitz zum Beispiel gleichzeitig - in einem Bewegungsablauf - längs zu verschieben und zu drehen. Dies ermöglicht eine komfortable, zügige, intuitive Verstellung von Innenraumbaugruppen durch einen Nutzer.

Bei dem Verstellantrieb kann es sich beispielsweise um einer bürstenlosen Gleichstrommotor (BLDC-Motor) handeln. Grundsätzlich können jedoch auch andere Motoren verwendet werden.

Unterschiedliche Applikationen für eine Antriebsvorrichtung der beschriebenen Art sind denkbar und möglich.

In einer Applikation kann die Innenraumbaugruppe zum Beispiel durch einen Fahrzeugsitz verwirklicht sein. Die Antriebsvorrichtung kann hierbei insbesondere zum Verstellen einer Rückenlehne des Fahrzeugsitzes relativ zu einem Sitzteil des Fahrzeugsitzes ausgebildet sein. Insbesondere kann die Antriebsvorrichtung in einem Servobetrieb ein manuelles Verschwenken der Rückenlehne relativ zum Sitzteil elektromotorisch unterstützen.

Hierbei ist die Antriebsvorrichtung insbesondere dazu ausgestaltet, ein Verschwenken der Rückenlehne aus einer verschwenkten Stellung in eine (näherungsweise aufrechte) Normalgebrauchsstellung elektromotorisch in einem Servobetrieb zu unterstützen. Das Aufrichten der Rückenlehne wird somit elektromotorisch unterstützt. Demgegenüber kann beispielsweise ein Vorschwenken der Rückenlehne aus der aufrechten Stellung in die verschwenkte Stellung manuell ohne elektromotorische Unterstützung durch die Antriebsvorrichtung, alternativ aber im Servobetrieb auch mit elektromotorischer Unterstützung erfolgen.

In einer anderen Applikation kann die Innenraumbaugruppe durch einen Fahrzeugsitz verwirklicht sein, der zum Bereitstellen einer Easy-Entry-Funktion für einen erleichterten Zugang für eine hinter dem Fahrzeugsitz gelegene Sitzreihe verstellt werden kann. Die Antriebsvorrichtung kann hierbei dazu ausgestaltet sein, eine Sitzverstellung zum Bereitstellen der Easy-Entry-Funktion elektromotorisch in einem Servobetrieb zu unterstützen. Zum Bereitstellen der Easy-Entry-Funktion kann der Fahrzeugsitz beispielsweise um eine Schwenkachse insgesamt verschwenkt werden, wobei zum Verschwenken eine Arretierungsvorrichtung zum Arretieren des Fahrzeugsitzes an einer Bodenbaugruppe entriegelt wird und sodann, nach Lösen der Arretierungsvorrichtung, der Fahrzeugsitz mit seinem Sitzteil und der daran angeordneten Rückenlehne um die Schwenkachse verschwenkt wird.

Zusätzlich kann im Rahmen der Easy-Entry-Funktion die Rückenlehne zu dem Sitzteil verschwenkt werden, wobei unterschiedliche Verstellantrieb zum elektromotorisch unterstützten Verstellen des Fahrzeugsitzes insgesamt und zum elektromotorisch unterstützten Verstellen der Rückenlehne relativ zum Sitzteil vorgesehen sein können, die Verstellung alternativ aber auch im Rahmen einer Gesamtkinematik in zwangsgekoppelter Weise erfolgen kann und durch einen einzigen Verstellantrieb elektromotorisch unterstützt wird.

Beispielsweise kann die Antriebsvorrichtung zum elektromotorisch unterstützten Verstellen eines Fahrzeugsitzes zum Bereitstellen einer Easy-Entry-Funktion für einen Fahrzeugsitz mit einer Kinematik wie in der DE 10 2017 215 929 A1 beschrieben ausgestaltet sein.

Der der Erfindung zugrunde liegende Gedanke soll nachfolgend anhand der in den Figuren dargestellten Ausführungsbeispiele näher erläutert werden. Es zeigen:

Fig. 1     eine schematische Ansicht eines Fahrzeugs mit Innenraumbaugruppen in Form von Fahrzeugsitzen;

Fig. 2     eine schematische Draufsicht auf ein Fahrzeug;

Fig. 3A    eine Ansicht zur Illustration eines Steigungswinkels eines Fahrzeugs;

Fig. 3B    eine Ansicht zur Illustration eines Neigungswinkels eines Fahrzeugs;

Fig. 4     eine funktionale Ansicht einer Steuereinrichtung einer Antriebsvorrichtung;

Fig. 5     eine grafische Ansicht einer von einem Nutzer aufzubringenden Verstellkraft über einen Verstellweg einer Innenraumbaugruppe in einem Servobetriebsmodus;

Fig. 6     eine schematische Ansicht einer Antriebsvorrichtung zum Verstellen einer Innenraumbaugruppe, zum Beispiel eines Fahrzeugsitzes;

Fig. 7     eine schematische Ansicht eines Fahrzeugsitzes mit daran angeordneten Sensoreinrichtungen und einer Innenraumüberwachungseinrichtung;

Fig. 8     eine schematische Ansicht einer Innenraumbaugruppe in Form eines Fahrzeugsitzes, ausgebildet für eine elektromotorisch unterstützte Verstellung einer Rückenlehne relativ zu einem Sitzteil des Fahrzeugsitzes;

Fig. 9A      eine schematische Ansicht einer Innenraumbaugruppe in Form eines Fahrzeugsitzes, ausgebildet für eine elektromotorisch unterstützte Verstellung des Fahrzeugsitzes zur Bereitstellung einer Easy-Entry-Funktion; und

Fig. 9B      die Innenraumbaugruppen gemäß Fig. 9A, in einer verstellten Stellung.

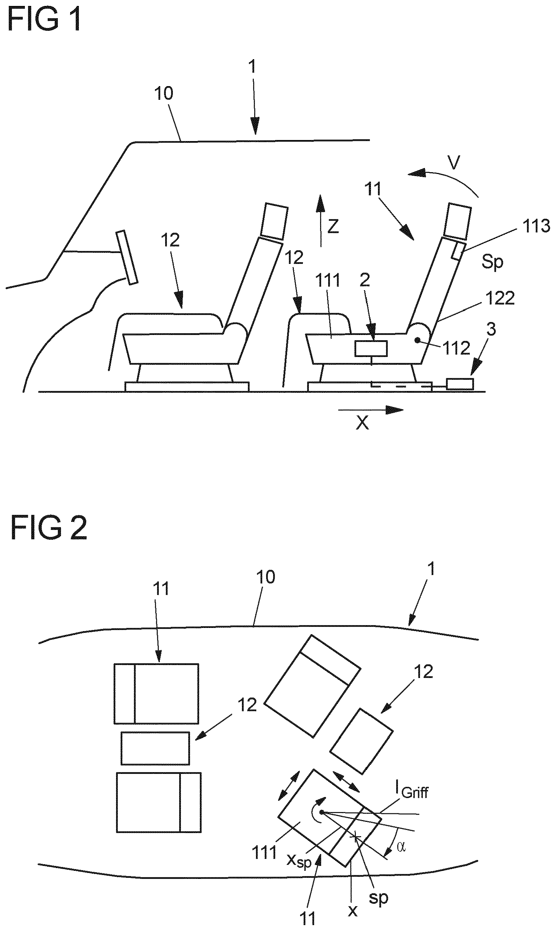

Fig. 1 zeigt in einer schematischen Ansicht ein Fahrzeug 1, das einen durch eine Fahrzeugkarosserie 10 eingefassten Innenraums ausbildet, in dem unterschiedliche Innenraumbaugruppen zum Beispiel in Form von Fahrzeugsitzen 11 und Konsolenelementen 12 und zudem gegebenenfalls weitere Innenraumbaugruppen wie zum Beispiel Monitore, Trennwände, Ablagen, Staufächer oder dergleichen angeordnet sind.

Im Rahmen von neuen Innenraumkonzepten, zum Beispiel im Zusammenhang mit autonom fahrenden Fahrzeugen, können Innenraumbaugruppen 11, 12 in variabler Weise im Innenraum eines Fahrzeugs 1 verstellbar sein.

Zum Beispiel kann eine Innenraumbaugruppe 11 in Form eines Fahrzeugsitzes in variabler Weise verstellbar sein, um den Fahrzeugsitz entlang einer durch eine Fahrzeuglängsrichtung X und eine Fahrzeugquerrichtung Y definierten Verstellebene zu verstellen und zudem gegebenenfalls um eine Vertikalrichtung Z zu verdrehen, wie dies aus Fig. 1 in Zusammenschau mit Fig. 2 ersichtlich ist. Zudem können Baugruppen des Fahrzeugsitzes, zum Beispiel die Rückenlehne 112, verstellbar sein, um die Stellung der jeweiligen Baugruppe anzupassen. Beispielsweise kann die Rückenlehne 112 in ihrer Neigung verstellbar sein. Zudem kann das Sitzteil 111 in seiner Höhenposition und auch in seiner Neigungsstellung einstellbar sein.

Bei einer Innenraumbaugruppe 11, 12 besteht grundsätzlich der Wunsch nach einem komfortablen, intuitiven, haptisch angenehmen Verstellen durch einen Nutzer. Das Verstellen soll hierbei nach Möglichkeit präzise und schnell erfolgen können, wobei der dafür erforderliche Kraftaufwand durch einen Nutzer begrenzt sein soll.

Zum Verstellen einer Innenraumbaugruppe 11, 12 ist, wie dies schematisch in Fig. 1 dargestellt ist, eine Antriebsvorrichtung 2 vorgesehen, die mit einer Steuereinrichtung 3 in Verbindung steht. Die Antriebsvorrichtung 2 ist elektromotorisch ausgestaltet und kann betrieben werden, um eine zugeordnete Innenraumbaugruppe 11, 12 elektromotorisch zwischen unterschiedlichen Positionen zu bewegen.

Grundsätzlich kann einer jeden zu verstellenden Innenraumbaugruppe 11, 12 oder einer zu verstellenden Unterbaugruppe einer Innenraumbaugruppe 11, 12, beispielsweise der Rückenlehne 112 eines Fahrzeugsitzes, eine eigene elektromotorische Antriebsvorrichtung 2 zugeordnet sein, wobei die Antriebsvorrichtungen 2 beispielsweise mit einer gemeinsamen Steuereinrichtung 3 verbunden sein können, sodass die Steuereinrichtung 3 die Antriebsvorrichtungen 2 zum Verstellen der zugeordneten Innenraumbaugruppe und 11, 12 gemeinsam steuert.

Unter Verwendung der Antriebsvorrichtung 2 kann eine zugeordnete Innenraumbaugruppe 11, 12 entlang einer definierten Bewegungsbahn zu verstellen sein. Beispielsweise kann ein Fahrzeugsitz entlang der Fahrzeuglängsrichtung X entlang einer durch Führungsschienen definierten Bewegungsbahn relativ zu einem Fahrzeugboden zu verschieben sein. Ein Rückenlehnenteil 112 kann zudem um eine definierte Schwenkachse 110 relativ zum Sitzteil 111 zu verschwenken sein.

Denkbar ist jedoch auch, dass eine Innenraumbaugruppe 11, 12 frei entlang eines Fahrzeugbodens des Fahrzeugs 1 zu bewegen ist und somit frei im Innenraum verstellt und zum Beispiel an definierten Ankerpunkten im Innenraum arretiert werden kann. Insofern sind nicht zwingend zum Beispiel Führungsschienen zum Definieren einer festen, vorgegebenen Bewegungsbahn vorzusehen.

Eine (jede) Antriebsvorrichtung 2 kann beispielsweise in einem Automatikbetrieb und einem Servobetrieb betrieben werden und kann somit ein automatisches Verstellen der jeweils zugeordneten Innenraumbaugruppe 11, 12 oder ein manuelles, aber elektromotorisch durch die Antriebsvorrichtung 2 unterstütztes Verstellen der Innenraumbaugruppe 11, 12 durch einen Nutzer bewirken. Die Antriebsvorrichtung 2 kann hierzu beispielsweise zwischen unterschiedlichen Betriebsmodi schaltbar sein, wobei der Verstellantrieb 20 in Abhängigkeit vom jeweils eingestellten Betriebsmodus in unterschiedlicher Weise gesteuert wird.

Während im Automatikbetrieb eine Regelung beispielsweise auf eine vorbestimmte Drehzahl erfolgen soll, um die Innenraumbaugruppe 11, 12 mit einer vorbestimmten Verstellgeschwindigkeit zwischen unterschiedlichen Positionen zu bewegen, soll im Servobetrieb durch den Verstellantrieb 20 eine Kraft bereitgestellt werden, die bewirkt, dass eine von einem Nutzer zusätzlich aufzubringende Nutzerkraft ein Verstellen der Innenraumbaugruppe 11, 12 bewirkt. Die vom Nutzer aufzubringende Nutzerkraft soll hierbei über den Verstellweg der Innenraumbaugruppe 11, 12 vorzugsweise zumindest näherungsweise gleich sein oder einer gewünschten Kurve folgen, um dem Nutzer ein komfortables, haptisch angenehmes Verstellen zu ermöglichen.

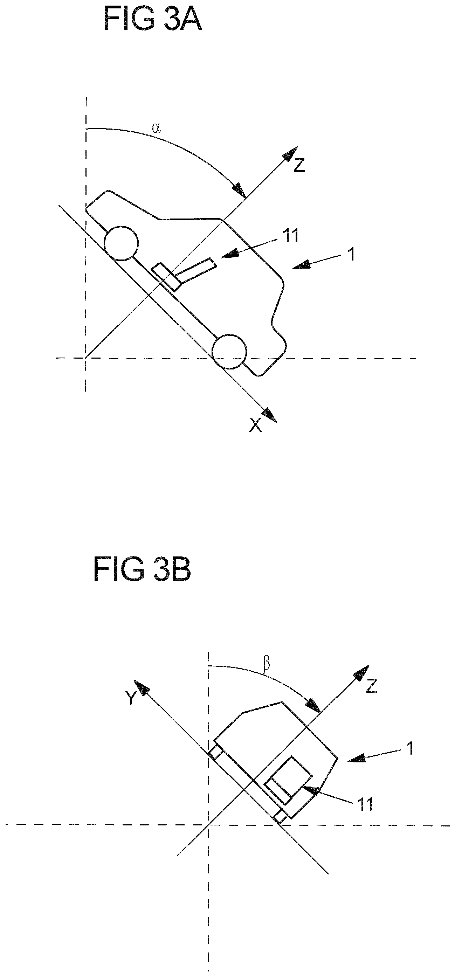

Fig. 3A und 3B zeigen (in zur Illustration übertriebenen Darstellungen) unterschiedliche Fahrzeuglagen und sich daraus ergebende Stellungen einer Innenraumbaugruppe 11 in Form eines Fahrzeugsitzes im Inneren des Fahrzeugs 1.

Fig. 3A zeigt hierbei ein Fahrzeug 1, das zum Beispiel auf einem Hang mit einer Steigung abgestellt ist und dementsprechend einen Steigungswinkel $\alpha$ zwischen der Fahrzeugvertikalachse Z und einer (durch die Schwerkraftrichtung bestimmten) Vertikalen aufweist. Der Steigungswinkel $\alpha$ des Fahrzeugs 1 wird um die Fahrzeugquerachse Y (siehe Fig. 2B) gemessen.

Fig. 3B zeigt demgegenüber ein Fahrzeug 1, das um die Fahrzeuglängsachse X (siehe Fig. 3A) geneigt ist. Die Fahrzeugvertikalachse Z weist in diesem Fall einen um die Fahrzeuglängsachse X gemessenen Neigungswinkel β zur Vertikalen auf.

Die Fahrzeuglage geht, wie nachfolgend erläutert werden soll, in die Berechnung der durch den Verstellantrieb 20 im Servobetriebsmodus bereitzustellenden Kraft ein, die einem Nutzer bei einem Verstellen der Innenraumbaugruppe 11, 12 unterstützen soll.

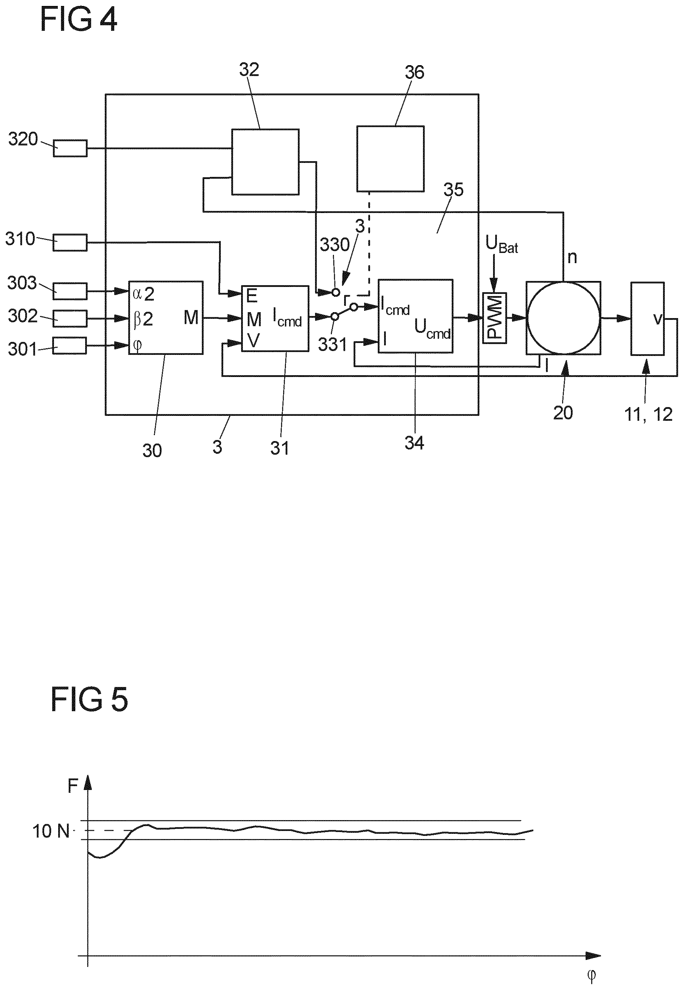

Eine in Fig. 4 in einem Ausführungsbeispiel dargestellte Steuereinrichtung 3 zum Steuern des Verstellantriebs 20 der Antriebsvorrichtung 2 weist unterschiedliche Regelungsmodule auf, die abhängig vom Betriebsmodus dazu dienen, einen (dem Motorstrom entsprechenden) Strom des als Elektromotor ausgebildeten Verstellantriebs 20 so einzustellen, dass ein Verstellen einer Innenraumbaugruppe 11, 12 abhängig vom Betriebsmodus in gewünschter Weise erfolgt, nämlich im Automatikbetrieb mit einer gewünschten Verstellgeschwindigkeit und im Servobetrieb in kraftunterstützter Weise.

Die Steuereinrichtung 3 verwirklicht ein Stromregelungsmodul 34, dem ein Sollwert $I_{cmd}$ zugeführt wird, wobei abhängig vom Betriebsmodus das Stromregelungsmodul 34 den Sollwert $I_{cmd}$ von einem Drehzahlregelungsmodul 32 oder einem Servoregelungsmodul 31 erhält.

Das Drehzahlregelungsmodul 32 dient hierbei dazu, in einem Automatikbetrieb den Sollwert $I_{cmd}$ so vorzugeben, dass sich am Verstellantrieb 20 eine gewünschte Drehzahl und entsprechend an der Innenraumbaugruppe 11, 12 eine gewünschte Verstellgeschwindigkeit v ergibt.

Das Servoregelungsmodul 31 dient demgegenüber dazu, den Sollwert $I_{cmd}$ so vorzugeben, dass ein manuelles Verstellen der Innenraumbaugruppe 11, 12 im Servobetrieb mit einer Kraft unterstützt wird, die so eingestellt wird, dass die von einem Nutzer zusätzlich aufzubringende Kraft vorzugsweise über den Verstellweg der Innenraumbaugruppe 11, 12 zumindest näherungsweise gleich ist oder einer gewünschten Kurve folgt.

Das Drehzahlregelungsmodul 32 regelt im Automatikbetrieb die Drehzahl des Verstellantriebs 20. Dem Drehzahlregelungsmodul 32 wird hierbei eine Solldrehzahl $n_{cmd}$ über einen Eingang 320 zugeführt, wobei die Solldrehzahl $n_{cmd}$ beispielsweise in einem Speicher gespeichert und somit (als konstanter Wert oder als Drehzahlverlauf über den Verstellweg) fest vorgegeben ist, gegebenenfalls aber auch durch einen Nutzer angepasst werden kann. Abhängig von der Solldrehzahl $n_{cmd}$ und der sich tatsächlich am Verstellantrieb 20 im Regelungsbetrieb ergebenden Drehzahl bestimmt das Drehzahlregelungsmodul 32 einen Sollwert $I_{cmd}$, den es dem Stromregelungsmodul 34 zuführt.

Im Automatikbetrieb ist das Drehzahlregelungsmodul 32 über eine Schalteinrichtung 33 mit dem Stromregelungsmodul 34 verbunden, indem die Schalteinrichtung 33 auf einen Schaltpunkt 330 geschaltet ist. Der vom Drehzahlregelungsmodul 32 ausgegebene Sollwert $I_{cmd}$ wird dem Stromregelungsmodul 34 somit zugeführt, sodass das Stromregelungsmodul 34 eine Stromregelung anhand des vom Drehzahlregelungsmodul 32 erhaltenen Sollwerts $I_{cmd}$ vornehmen kann.

Die Schalteinrichtung 33 kann physisch durch einen mechanischen Schalter verwirklicht sein. Vorteilhaft ist die Schalteinrichtung 33 aber softwaretechnisch durch die Software der Steuereinrichtung 3 umgesetzt. Ebenso sind die Module der Steuereinrichtung 3 vorzugsweise durch Softwaremodule umgesetzt.

Die Steuerung der Schalteinrichtung 33 erfolgt beispielsweise über ein Steuermodul 36 der Steuereinrichtung 3.

Im Stromregelungsmodul 34 erfolgt eine Stromregelung. Das Stromregelungsmodul 34 regelt den Strom des Verstellantriebs 20 derart, dass er auf den dem Stromregelungsmodul 34 zugeführten Sollwert 34 eingestellt wird. Das Stromregelungsmodul 34 stellt den Strom unter Verwendung eines Spannungsstellwerts $U_{cmd}$ in Form eines Lastfaktors (zwischen 0% und 100%) ein, indem der Spannungsstellwert $U_{cmd}$ einer Pulsweitenmodulation 35 zugeführt wird, die anhand der Batteriespannung $U_{Bat}$ des Fahrzeugs und dem Spannungsstellwert $U_{cmd}$ eine Ausgangsspannung erzeugt und dem Verstellantrieb 20 zuführt. Die Pulsweitenmodulation 35 arbeitet vorzugsweise mit vergleichsweise hoher Frequenz, insbesondere mit einer Frequenz zwischen 5 kHz und 30 kHz, beispielsweise 20 kHz, betrieben wird. Anhand des Sollwerts $I_{cmd}$ und des tatsächlich sich ergebenden Stroms I des Stellantriebs 21 wird der Stellwert $U_{cmd}$ so eingestellt, dass der Motorstrom I auf den Sollwert $I_{cmd}$ geregelt wird.

Im Automatikbetrieb erfolgt somit eine Regelung nach Art einer Kaskadenregelung, bei der das Drehzahlregelungsmodul 32 einen Stellwert in Form eines Sollwerts $I_{cmd}$ bestimmt und dem nachgeordneten Stromregelungsmodul 34 zur Stromregelung zuführt.

Durch Schalten der Schalteinrichtung 33 auf den Schaltpunkt 331 kann in einen Servobetrieb umgeschaltet werden, in dem nunmehr dem Stromregelungsmodul 34 ein Sollwert $I_{cmd}$ von dem Servoregelungsmodul 31, nicht aber von dem Drehzahlregelungsmodul 32 zugeführt wird. Anhand des von dem Servoregelungsmodul 31 erhaltenen Sollwerts erfolgt eine Stromregelung dann derart, dass die durch den Verstellantrieb 20 bereitgestellte Kraft einen Nutzer beim Verstellen der Innenraumbaugruppe 11, 12 unterstützt und der Nutzer eine über den Verstellweg der Innenraumbaugruppe 11, 12 vorzugsweise weitestgehend gleichförmige Nutzerkraft für das elektromotorisch unterstützte Verstellen der Innenraumbaugruppe 11, 12 aufzubringen hat.

Das Bestimmen des Sollwerts $I_{cmd}$ durch das Servoregelungsmodul 31 erfolgt in Abhängigkeit von einer an der Innenraumbaugruppe 11, 12 wirkenden Last, die durch ein Lastberechnungsmodul 30 in Abhängigkeit von der Fahrzeuglage und zum Beispiel einer Position der Innenraumbaugruppe 11, 12 berechnet wird.

Dies kann beispielsweise anhand einer Verstellung in Form einer Drehbewegung um die Fahrzeugvertikalachse Z einer Innenraumbaugruppe 11, 12 in Form eines Fahrzeugsitzes erläutert werden. Bei einer solchen Drehbewegung ergeben sich durch die Fahrzeugneigung und die Fahrzeugsteigung beeinflusste Lasten an der Innenraumbaugruppe 11, 12, die bei der Bestimmung des Sollwerts $I_{cmd}$ berücksichtigt werden.

Die an der Innenraumbaugruppe 11, 12 wirkende Last bestimmt sich grundsätzlich aus einer statischen Lastkraft und einer dynamischen Lastkraft.

Für ein Verdrehen um die Fahrzeugvertikalachse Z bestimmt sich ein an der Innenraumbaugruppe 11, 12 wirkendes statisches Lastmoment insbesondere anhand eines sich aufgrund der Schwerkraft um die Fahrzeugvertikalachse Z ergebenden Moments und zusätzlich anhand eines in der Lagerung der Innenraumbaugruppe 11 wirkenden Reibmoments. Das statische Drehmoment, bezeichnet als statisches Lastmoment, ergibt sich so zu

$$M_{stat} = M_{Neigung} * \cos(\alpha) + M_{Steigung} \pm M_R \text{ ,}$$

wobei $M_{stat}$ das statische Lastmoment, $M_{Neigung}$ ein sich aufgrund einer Fahrzeugneigung ergebendes Neigungsmoment, $M_{Steigung}$ ein sich aufgrund einer Fahrzeugsteigung ergebendes Steigungsmoment und $M_R$ ein Reibmoment in der Lagerung der Innenraumbaugruppe 11, 12 bezeichnet.

Anzumerken ist hierzu, dass der Term "$\cos(\alpha)$" in der obigen Gleichung nur vorliegt, wenn die Neigungs-/Steigungswinkel gemäß DIN ISO 8855 bestimmt sind (entsprechend dem Euler-Winkel, der sich aus einem Roll-Winkel, Pitch-Winkel und Yaw-Winkel ergibt). Wird der Neigungswinkel (absolut) gemessen, so entfällt der Term "$\cos(\alpha)$".

Das Steigungsmoment und das Neigungsmoment berechnen sich hierbei wie folgt:

- 

$$M_{Steigung} = x_{SP} * m * g * \sin(\alpha) * \sin(\varphi)$$

- 

$$M_{Neigung} = x_{SP} * m * g * \sin(\beta) * \cos(\varphi)$$

Die in diesen Gleichungen verwendeten Größen stellen hierbei dar:

| | |
|---|---|
| $\varphi$ | Aktueller Drehwinkel [°] - Offsetwinkel |
| $x_{SP}$ | Abstand Schwerpunkt - Drehachse [m] |
| $m$ | Masse der Innenraumbaugruppe [kg] |
| $g$ | Erdbeschleunigung [m/s$^2$] |
| $\alpha$ | Steigung Drehachse |
| $\beta$ | Neigung Drehachse [°] |
| $M_R$ | Reibmoment [Nm] |

Die Winkel $\alpha$, $\beta$ sind in Fig. 3A und 3B illustriert. Der Abstand $x_{SP}$ zwischen dem Schwerpunkt SP der Innenraumbaugruppe 11 und der Drehachse der Innenraumbaugruppe 11, 12 ist beispielhaft in Fig. 2 eingezeichnet. Die Steigung des Fahrzeugs 1 und die Neigung des Fahrzeugs 1 sowie die aktuelle Position der Innenraumbaugruppe 11, 12 können sensorisch durch Sensoren 301, 302, 303 erfasst werden, und entsprechend werden Messwerte dem Lastberechnungsmodul 30 zugeführt.

Bei der Bestimmung des statischen Lastmoments kann - zum Beispiel bei Ausgestaltung der Innenraumbaugruppe 11, 12 durch einen Fahrzeugsitz - auch eine Belegung durch einen Nutzer oder durch Objekte mit berücksichtigt werden. In diesem Fall ändert sich insbesondere die Masse der Innenraumbaugruppe 11, 12. Eine aufgrund einer Belegung wirkende Kraft kann beispielsweise anhand eines Sensorsignals einer Sensoreinrichtung der Innenraumbaugruppe 11, 12 zumindest näherungsweise bestimmt und bei der Berechnung des Lastmoments mit einbezogen werden.

Zusätzlich zum statischen Lastmoment wirkt bei Bewegung der Innenraumbaugruppe 11, 12 ein dynamisches Lastmoment, das sich wie folgt berechnet:

$$M_{dyn} = \ddot{\varphi} * I * c$$

$\varphi^{\ddot{}}$ bezeichnet hierbei die Beschleunigung der Innenraumbaugruppe 11, 12. Die Beschleunigung der Innenraumbaugruppe 11, 12 kann aus einer Änderung des Verstellwinkels $\phi$ um die Drehachse ermittelt werden. Alternativ kann die Beschleunigung aber auch aus der Verstellgeschwindigkeit v der Innenraumbaugruppe 11, 12, die dem Servoregelungsmodul 31 im Betrieb zugeführt wird, berechnet werden.

I steht in obiger Gleichung für die Trägheit der Innenraumbaugruppe 11. Der Faktor c ermöglicht das Einstellen einer dynamischen Haptik und kann Werte zwischen 0% und 100% annehmen. Wenn c = 100 %, wird eine Dynamikänderung bei Beschleunigung der Innenraumbaugruppe 11 im Wesentlichen motorisch ausgeglichen. Wenn c = 0 %, muss ein Nutzer bei einer Beschleunigung eine Kraftänderung selbst aufbringen.

Zusätzlich zu solchen statischen und dynamischen Lastkräften ergibt sich ein Drehmoment an der Innenraumbaugruppe 11, 12, das durch die Nutzerkraft am Angriffspunkt an der Innenraumbaugruppe 11, 12 bewirkt wird. Das Nutzerdrehmoment ergibt sich hierbei zu

$$M_{user} = F_{user} * l_{Griff}$$

mit

- $F_{user}$      Wunschbedienkraft [N]
- $l_{Griff}$      Abstand Angriffsposition - Schwenkachse [m]
- $M_{user}$      Vom Nutzer erzeugtes Moment [Nm]

Der Abstand $l_{Griff}$ zwischen einer Angriffsposition, an der ein Nutzer bestimmungsgemäß an einer Innenraumbaugruppe 11, 12 angreift und die beispielsweise der Position eines Bedienelements an der Innenraumbaugruppe 11, 12 entsprechen kann, und der entlang der Fahrzeugvertikalrichtung Z weisenden Drehachse der Innenraumbaugruppe 11, 12 ist in Fig. 2 schematisch dargestellt.

Anhand des statischen Lastmoments, des dynamischen Lastmoments und des Nutzerdrehmoments kann eine Kraftbilanz in Form einer Momentenbilanz aufgestellt werden, um ein durch den Verstellantrieb 20 bereitzustellendes Solllastmoment zu bestimmen. Die Momentenbilanz ergibt sich hierbei wie folgt:

$$M_{Soll} = M_{stat} + M_{dyn} - M_{user}$$

$M_{Soll}$ bezeichnet das durch die Antriebsvorrichtung 2 an der Drehachse bereitzustellende Drehmoment. Hieraus berechnet das Servoregelungsmodul 31 das durch den Verstellantrieb 20 bereitzustellende Drehmoment unter Einbeziehung eines Übersetzungsverhältnisses der Antriebsvorrichtung 2 zu

$$M_{Soll\_Antrieb} = M_{Soll} * \ddot{u}_{Hebel}$$

$\ddot{u}_{Hebel}$ bezeichnet das Übersetzungsverhältnis der Kinematik der Antriebsvorrichtung 2 zur Übersetzung einer durch die Antriebsvorrichtung 2 bereitgestellten Verstellkraft am Ort eines elektromotorischen Verstellantriebs in eine Verstellkraft am Orte der Drehachse der Innenraumbaugruppe 11, 12. $\ddot{U}_{Hebel}$ kann zum Beispiel abhängig von $\phi$ und zum Beispiel in Form einer Look-Up-Tabelle im System hinterlegt sein.

Aus dem Solldrehmoment des Antriebs berechnet sich das Sollmoment des elektromotorischen Verstellantriebs unter Einbeziehung des Motorwirkungsgrads und eines Übersetzungsverhältnisses eines Motorgetriebes zu

$$M_{Soll\_motor} = \frac{M_{Soll\_Antrieb}}{\eta_{motor} * \ddot{u}_{Getriebe}}$$

mit

- $\eta_{motor}$      Übersetzungswirkungsgrad [ ]
- $\ddot{u}_{Getriebe}$      Getriebeübersetzung [ ]

Der Motorstrom ist grundsätzlich proportional zum Motordrehmoment, sodass aus dem Sollmotordrehmoment $M_{Soll\_motor}$ der Sollwert wie folgt berechnet werden kann:

$$I_{Soll\_motor} = \frac{M_{Soll\_motor}}{Kt} + I_o$$

mit

- $Kt$    Motorkonstante [Nm/A]
- $I_o$    Motorleerlaufstrom [A]

Dieser Wert wird als Sollwert $I_{cmd}$ von dem Servoregelungsmodul 31 dem Stromregelungsmodul 34 im Servobetriebsmodus zugeführt.

Für eine andere Verstellung, zum Beispiel für eine Längs- und/oder Querverstellung einer Innenraumbaugruppe 11, 12 entlang eines Fahrzeugbodens, also entlang einer durch die Fahrzeuglängsrichtung X und die Fahrzeugquerrichtung Y aufgespannten Verstellebene, ergibt sich ein ähnliches Gleichungssystem, bei dem die Last an der Innenraumbaugruppe 11, 12 von der Neigung und Steigung des Fahrzeugs 1, wie in Fig. 3A und 3B dargestellt, abhängig ist.

Im Servobetriebsmodus wird der Sollwert $I_{cmd}$ somit unter Einbeziehung von auf die Innenraumbaugruppe 11, 12 wirkenden Lastkräften bestimmt derart, dass eine vom Nutzer aufzubringende Kraft über den Verstellweg der Innenraumbaugruppe 11 gleich ist oder einer gewünschten Kurve folgt. Entsprechend ergibt sich zum Beispiel, wie in Fig. 5 dargestellt, über einen Verstellweg der Innenraumbaugruppe 11, 12 (in Fig. 5 aufgezeichnet über einen Verstellwinkel $\phi$) eine zumindest näherungsweise gleichförmige Nutzerkraft F, die auf einen vorbestimmten Wert, beispielsweise auf 10 N, eingestellt sein kann. Ein Nutzer muss somit über den Verstellweg der Innenraumbaugruppe 11, 12 ein geregelte, gleichförmige Nutzerkraft von zum Beispiel 10 N aufbringen, um ein leichtgängiges, elektromotorisch unterstütztes Verstellen der Innenraumbaugruppe 11, 12 zu bewirken.

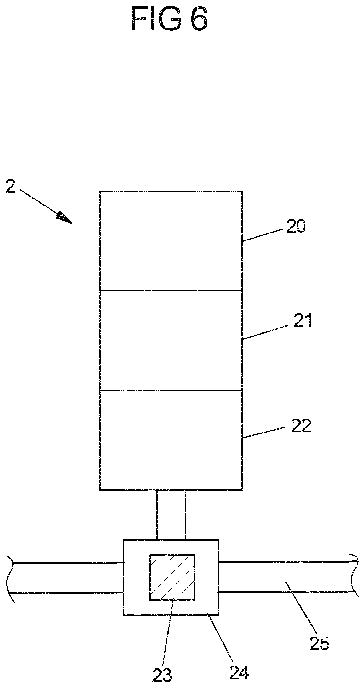

Fig. 6 zeigt schematisch eine Ansicht eines Ausführungsbeispiels einer Antriebsvorrichtung 2, die zum elektromotorischen Verstellen einer zugeordneten Innenraumbaugruppe 11, 12 ausgestaltet ist und insbesondere in einem Servobetrieb ein manuelles, aber elektromotorisch unterstütztes Verstellen der zugeordneten Innenraumbaugruppe 11, 12 ermöglicht.

Die Antriebsvorrichtung 2 weist einen elektromotorischen Verstellantrieb 20 in Form eines Elektromotors auf, der mit einem Getriebe 21 wirkverbunden ist. Das Getriebe 21 dient zum Antreiben eines Abtriebselements 23, das auf ein Getriebeelement 24 und darüber auf eine Verstellbaugruppe 25 zum Verstellen der zugeordneten Innenraumbaugruppe 11, 12 einwirkt.

Beispielsweise kann das Abtriebselement 23 durch eine Schnecke mit einer darin geformten Schneckenverzahnung ausgestaltet sein, die mit einem Getriebeelement 24 in Form einer Spindelmutter in Eingriff steht. Die Spindelmutter 24 kann beispielsweise an einer Verstellbaugruppe 25 in Form einer Spindel angeordnet sein, sodass durch Antreiben der Spindelmutter 24 eine Längsverstellung zwischen der Spindelmutter 24 und der Spindel 25 bewirkt und somit eine zugeordnete Innenraumbaugruppe 11, 12 längsverstellt werden kann. Eine solche Verstellkinematik kann beispielsweise bei einer Längsverstelleinrichtung einer Innenraumbaugruppe 11, 12 zum Beispiel in Form eines Fahrzeugsitzes verwirklicht sein.

Zum Bereitstellen eines Servobetriebs ist der Verstellantrieb 20 mit dem Getriebe 21 und der über das Abtriebselement 23, das Getriebeelement 24 und die Verstellbaugruppe 25 bereitgestellten Verstellkinematik beispielsweise nicht selbsthemmend ausgestaltet. Eine zugeordnete Innenraumbaugruppe 11, 12 kann somit manuell unter Mitbewegen der Verstellkinematik der Antriebsvorrichtung 2 verstellt werden.

Um eine Arretierung der Innenraumbaugruppe 11, 12 in einer gerade eingenommenen Stellung bewirken zu können, weist die Antriebsvorrichtung 2 bei dem dargestellten Ausführungsbeispiel eine Hemmungseinrichtung 22 in Form einer Bremse auf, die mit dem Abtriebselement 23 wirkverbunden ist und dazu dient, in einer Sperrstellung das Abtriebselement 23 und darüber die zugeordnete Innenraumbaugruppe 11, 12 festzustellen.

Wird ein Verstellvorgang initiiert, im Rahmen dessen ein Nutzer die Innenraumbaugruppe 11, 12 manuell unter elektromotorischer Unterstützung der Antriebsvorrichtung 2 verstellt, so wird die Hemmungseinrichtung 22 aus der Sperrstellung in eine nicht gesperrte Stellung freigeschaltet. Die Arretierung der Innenraumbaugruppe 11, 12 wird somit aufgehoben, sodass ein Verstellen der Innenraumbaugruppe 11, 12 vorgenommen werden kann.

Das Verstellen der Innenraumbaugruppe 11, 12 soll grundsätzlich in komfortabler Weise durch einen Nutzer vorgenommen werden können, indem ein Nutzer an der zu verstellenden Innenraumbaugruppe 11, 12 angreift und diese unter manueller Kraftwirkung bewegt, wobei das Verstellen elektromotorisch unterstützt wird und im Servobetrieb der Antriebsvorrichtung 2 ein Nutzer somit nur eine vergleichsweise kleine Verstellkraft aufbringen muss, eine darüber hinaus erforderliche Verstellkraft aber durch die Antriebsvorrichtung 2 in elektromotorischer Weise zu Verfügung gestellt wird. Das Initiieren des Verstellvorgangs erfolgt hierbei bei Erkennen eines Verstellwunsches eines Nutzers, indem beispielsweise erfasst wird, ob ein Nutzer in einer Weise an der Innenraumbaugruppe 11, 12 angreift, die auf einen Verstellwunsch hindeutet.

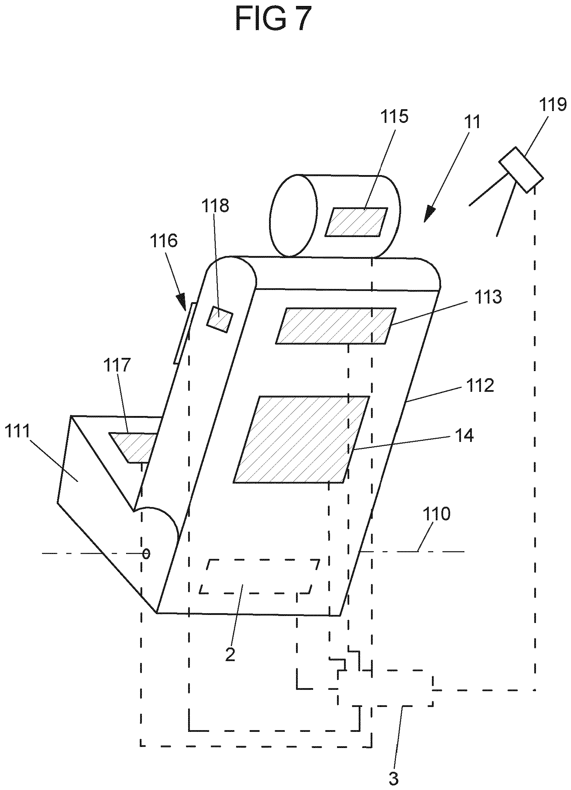

In einer Ausgestaltung kann die Innenraumbaugruppe 11, 12, wie dies schematisch in Fig. 7 dargestellt ist, ein Bedienelement 13 in Form eines Tasters aufweisen, der durch einen Nutzer zu betätigen ist, um einen Verstellvorgang zu initiieren. Ein Verstellen der Innenraumbaugruppe 11, 12, beispielsweise eines Fahrzeugsitzes, kann hierbei beispielsweise möglich sei, solange der Nutzer das Bedienelement 13 betätigt und gedrückt hält. Alternativ kann nach einmaliger Betätigung der Verstellmodus gestartet werden, wobei der Verstellmodus beispielsweise nach einer vorbestimmten Zeit oder nach einer vorbestimmten Zeit nach einer erfolgten Verstellaktion selbsttätig beendet wird.

Zusätzlich oder alternativ kann ein Bedienelement 14 in Form eines Schalters zum Beispiel zentral im Fahrzeuginnenraum, zum Beispiel an einer Mittelkonsole, angeordnet sein. Ein Betätigen des Bedienelements 14 kann einen Verstellmodus für eine, mehrere oder sämtliche Innenraumbaugruppen 11, 12 starten, sodass die Innenraumbaugruppen 11, 12 in servounterstützter Weise verstellt werden können.

Zusätzlich oder alternativ zu einem Bedienelement 13, 14 können Sensoreinrichtungen 113-118 zum Detektieren eines Verstellwunsches an der Innenraumbaugruppe 11 angeordnet sein, wie dies schematisch in Fig. 7 dargestellt ist. Solche Sensoreinrichtungen 113-118 können in unterschiedlicher Weise ausgestaltet und an unterschiedlichen Orten an der zu verstellenden Innenraumbaugruppe 11, 12 angeordnet sein. Die Sensoreinrichtungen 113-118 können hierbei unterschiedlichen Unterbaugruppen der Innenraumbaugruppe 11, 12 zugeordnet sein, sodass über die Sensoreinrichtungen 113-118 ein Verstellwunsch für die Innenraumbaugruppe 11, 12 insgesamt oder einer Unterbaugruppe der Innenraumbaugruppe 11, 12 erfasst werden kann.

Beispielsweise können Sensoreinrichtungen 113, 114, 115, 116, 117 in Form von Annäherungssensoren oder taktilen Berührungssensoren an unterschiedlichen Orten an dem Rückenlehnenteil 112 und/oder am Sitzteil 111 der Innenraumbaugruppe 11, 12 in Form des Fahrzeugsitzes angeordnet sein. Über solche Sensoreinrichtungen 113-117 kann somit erfasst werden, ob ein Nutzer mit einem Körperteil sich der zu verstellenden Innenraumbaugruppe 11, 12 nähert und auf die Innenraumbaugruppe 11, 12 einwirkt, um diese gegebenenfalls zu verstellen.

Bei dem Beispiel gemäß Fig. 7 sind Sensoreinrichtungen 113, 114 hierbei, in Höhenrichtung versetzt, rückseitig des Rückenlehnenteils 112 angeordnet. Eine Sensoreinrichtung 115 ist demgegenüber an einer am oberen Ende des Rückenlehnenteils 112 angeordneten Kopfstütze platziert. Eine Sensoreinrichtung 116 ist vorderseitig des Rückenlehnenteils 112 angeordnet. Eine Sensoreinrichtung 117 ist am Sitzteil 111 angeordnet. Sämtliche Sensoreinrichtungen 113-117 können beispielsweise als Annäherungssensoren, zum Beispiel in Form von kapazitiven Sensoren, oder als taktile Berührungssensoren ausgestaltet sein, wobei denkbar ist, dass die Sensoreinrichtungen 113-117 gleichartig ausgestaltet sind oder unterschiedliche Funktionsprinzipien verwirklichen.

Erfassungssignale der Sensoreinrichtungen 113-117 können gemeinsam oder gesondert ausgewertet werden. Wird ein Signal beispielsweise über die Sensoreinrichtungen 113, 114 rückseitig des Rückenlehnenteils 112 erfasst, kann dies als Verstellwunsch zum Vorschwenken des Rückenlehnenteils 112 interpretiert werden. Wird demgegenüber ein Signal an der Sensoreinrichtung 115 an der Kopfstütze detektiert, kann dies als Verstellwunsch zum Verstellen der Kopfstütze interpretiert werden. Wird ein Signal an der vorderseitig des Rückenlehnenteils 112 angeordneten Sensoreinrichtung 116 erfasst, kann dies als Verstellwunsch für ein Zurückschwenken des Rückenlehnenteils 112 interpretiert werden.

Über die Sensoreinrichtung 117 kann beispielsweise eine Sitzbelegung durch einen Nutzer erfasst werden, um gegebenenfalls abhängig davon, ob eine Verstellung bei auf dem Sitz befindlichem Nutzer oder ohne Nutzer erfolgen soll, eine durch die Antriebsvorrichtung 2 bereitzustellende Kraft zur Servounterstützung anzupassen.

Zusätzlich oder alternativ kann an der zu verstellenden Innenraumbaugruppe 11, 12 eine Sensoreinrichtung 118 in Form eines Beschleunigungssensors oder eines Geschwindigkeitssensors angeordnet sein, mit der eine Beschleunigung oder eine Verstellgeschwindigkeit an der Innenraumbaugruppe 11, 12 erfasst werden kann. Greift ein Nutzer an der Innenraumbaugruppe 11, 12 an und verstellt diese im Rahmen der an der Innenraumbaugruppe 11, 12 vorhandenen Systemelastizität, kann dies ausgewertet und zur Erkennung eines Verstellwunsches genutzt werden.

Wiederum zusätzlich oder alternativ kann in dem Fahrzeug 1 eine Innenraumüberwachungseinrichtung 119 zum Beispiel in Form einer Kamera, eines Radarsystems oder eines Lidarsystems vorgesehen sein, die eine Innenraumüberwachung des Innenraums des Fahrzeugs ermöglicht. Durch bildgestützte Auswertung von über die Innenraumüberwachungseinrichtung 119 erfassten Signalen kann eine Nutzerbewegung ausgewertet und erkannt werden, um auf einen Verstellwunsch zu schließen.

Unter Verwendung von Sensoreinrichtungen 113-118 und/oder einer Innenraumüberwachungseinrichtung 119 kann zum Beispiel eine Nutzergeste erkannt werden, die als Verstellwunsch interpretiert wird. Beispielsweise können ein oder mehrere Nutzergesten vorbestimmt sein, die ein Nutzer ausführen muss, um einen Verstellvorgang zum Verstellen einer Innenraumbaugruppe 11, 12 zu initiieren. Eine solche Geste kann beispielsweise durch eine Bewegung eines bestimmten Körperteils, zum Beispiel der Hand eines Nutzers, mit einem vorbestimmten Bewegungsmuster, zum Beispiel entlang einer bestimmten Bewegungsrichtung, definiert sein.

Beispielsweise kann eine solche Geste in einer Klopfbewegung an einem Rückenlehnenteil 112 eines Fahrzeugsitzes bestehen. Klopft ein Nutzer mit der flachen Hand beispielsweise zweimal rückseitig auf das Rückenlehnenteil 112, kann dies als Verstellwunsch für ein Vorschieben des Fahrzeugsitzes oder ein Vorschwenken des Rückenlehnenteils 112 interpretiert werden, wobei generell für unterschiedliche Verstellvorgänge unterschiedliche Gesten definiert sind.

Eine Gestenerkennung kann einen Verstellmodus zum Verstellen einer oder mehrerer Innenraumbaugruppen 11, 12 starten, wobei mehrere Innenraumbaugruppen 11, 12 gemeinsam bewegt werden können. Der Verstellmodus kann beispielsweise nach einer vorbestimmten Zeit beendet werden. Alternativ kann der Verstellmodus nach einer vorbestimmten Zeit nach einer letzten Verstellaktion beendet werden. Wiederum alternativ kann der Verstellmodus durch eine Beendigungsgeste beendet werden, die ein Nutzer auszuführen hat.

Um die Anforderungen für eine Sensorik zum Erkennen eines Verstellwunsches zu reduzieren und die Initiierung des Servobetriebs zu vereinfachen, kann auch vorgesehen sein, dass der Verstellmodus zum Verstellen der Innenraumbaugruppe 11, 12 in Abhängigkeit von einem oder mehreren Triggerkriterien aktiviert wird.

Bei solchen Triggerkriterien kann es sich beispielsweise um den Belegungszustand einer Innenraumbaugruppe 11, 12, zum Beispiel eines Fahrzeugsitzes, um einen Öffnungszustand einer Fahrzeugtür, insbesondere einer Fahrzeugseitentür oder einer Heckklappe, oder um einen Fahrzustand des Fahrzeugs handeln. Solche Triggerkriterien können als positive Kriterien geprüft werden und dazu führen, dass der Verstellmodus aktiviert wird. Solche Triggerkriterien können aber auch als negative Kriterien (Ausschlusskriterien) geprüft werden und bewirken, dass der Verstellmodus nur gestartet werden kann, wenn ein solches negatives Kriterium nicht gegeben ist.

Als positives Kriterium kann zum Beispiel der Öffnungszustand einer Fahrzeugtür abgefragt werden. So kann beispielsweise der Verstellmodus aktiviert werden, wenn eine Fahrzeugseitentür oder die Heckklappe geöffnet wird, wobei in diesem Fall der Verstellmodus zum Beispiel für eine Innenraumbaugruppe 11, 12 im Bereich der geöffneten Fahrzeugseitentür oder der Heckklappe aktiviert wird.

Als negatives Kriterium kann zum Beispiel der Belegungszustand oder ein Fahrzustand des Fahrzeugs abgefragt werden. So kann eine Aktivierung des Verstellmodus beispielsweise nur dann möglich sein, wenn eine Innenraumbaugruppe 11, 12 in Form eines Fahrzeugsitzes nicht belegt ist oder wenn das Fahrzeug nicht fährt, sich also im Stillstand befindet.

Wird der Verstellmodus bei Vorliegen eines Triggerkriteriums oder bei Vorliegen einer vorbestimmten Kombination von Triggerkriterien aktiviert, so kann vorgesehen sein, dass die Hemmungseinrichtung 22 entsperrt wird und somit eine Feststellung der Innenraumbaugruppe 11, 12, aufgehoben wird. Zusätzlich wird beispielsweise der Verstellantrieb 20 zunächst mit einer niederenergetischen Pulsweitenmodulation bestromt, um die Innenraumbaugruppe 11, 12 zum Beispiel unter Ausgleich einer Schwerkraft in Position zu halten. Wird sodann eine Bewegung der Innenraumbaugruppe 11, 12 erkannt, beispielsweise anhand einer Bewegungserkennung unter Verwendung von Hallsensoren an der Innenraumbaugruppe 11, 12, so wird auf einen Verstellwunsch eines Nutzers geschlossen und der Servobetrieb gestartet, indem ein weiteres Verstellen der Innenraumbaugruppe 11, 12 elektromotorisch durch den Verstellantrieb 20 im Servobetrieb unterstützt wird.

Die Bestromung bei Aktivierung des Verstellmodus kann niederenergetisch derart erfolgen, dass die Innenraumbaugruppe 11, 12 elektromotorisch in Position gehalten wird, sich aber zunächst nicht bewegt. Alternativ kann die Bestromung derart erfolgen, dass die Innenraumbaugruppe 11, 12 bei Aktivierung in eine langsame Bewegung versetzt wird, wobei die Bewegung durch wechselnde Bestromung alternierend in unterschiedliche Bewegungsrichtungen erfolgen kann. Ein Wert für die Bestromung bei Aktivierung des Verstellmodus kann hierbei durch Konfiguration vorgegeben sein, durch Kalibration bei der Fertigung eingemessen werden oder auch zu Beginn eines jeden Verstellmodus adaptiv eingestellt werden.

Ein Verstellwunsch eines Nutzers kann bei Aktivierung des Verstellmodus durch einfache Bewegungserkennung an der Innenraumbaugruppe 11, 12 erfolgen. Alternativ kann für den Start des Servobetriebs ein bestimmtes Bewegungsverhalten an der Innenraumbaugruppe 11, 12 vorausgesetzt und überwacht werden. So wird der Servobetrieb beispielsweise dann gestartet, wenn der Nutzer eine vorbestimmte Rüttelbewegung oder eine Anstupsbewegung an der Innenraumbaugruppe 11, 12 ausführt, die von der Steuereinrichtung 3 entsprechend identifiziert wird.

Die Steuereinrichtung 3 kann bei Aktivierung des Verstellmodus auch dazu ausgestaltet sein, ein Hinweissignal für einen Nutzer zu erzeugen, sodass der Nutzer alarmiert wird, dass der Verstellmodus für eine bestimmte Innenraumbaugruppe 11, 12 aktiviert worden ist und somit im Servobetrieb verstellt werden kann. Ein solcher Hinweis kann dadurch erfolgen, dass bei Aktivierung des Verstellmodus der Verstellantrieb 20 für eine langsame Bewegung der Innenraumbaugruppe 11, 12 angesteuert wird, die von einem Nutzer wahrnehmbar ist. Alternativ kann die Steuereinrichtung 3 ein Signal zum Beispiel an ein Audiosystem des Fahrzeugs abgeben, das den Nutzer auf den Servobetrieb hinweist. Wiederum alternativ kann die Steuereinrichtung 3 den Verstellantrieb 20 zum Beispiel für eine vorbestimmte Geräuschgenerierung, zum Beispiel zum Abspielen von Musik, ansteuern.

Eine Antriebsvorrichtung 2 der beschriebenen Art kann zum elektromotorisch unterstützten verstellen in einem Servobetrieb in ganz unterschiedlichen Applikationen zum Einsatz kommen.

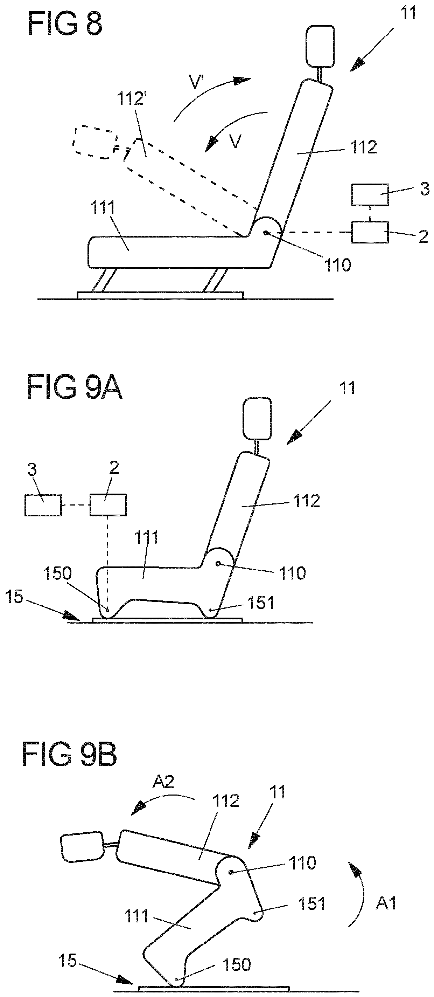

In einer Applikation, schematisch dargestellt in Fig. 8, kann die Antriebsvorrichtung 2 zum Beispiel zum elektromotorisch unterstützten Verstellen einer Rückenlehne 112 relativ zu einem Sitzteil 111 eines Fahrzeugsitzes 11 ausgestaltet sein. Die Antriebsvorrichtung 2 kann hierbei insbesondere ein Verschwenken der Rückenlehne 112 um eine Schwenkachse 110 gegenüber dem Sitzteil 111 im Servobetrieb elektromotorisch unterstützen.

Hierbei kann vorgesehen sein, dass die Antriebsvorrichtung 2 insbesondere ein Aufrichten der Rückenlehne 112 in eine Schwenkrichtung V' aus einer vorgeklappten Stellung 112' (dargestellt in Fig. 8 in gestrichelten Linien) elektromotorisch unterstützt. Ein Vorklappen der Rückenlehne 112 in eine Schwenkrichtung V wird demgegenüber beispielsweise nicht elektromotorisch durch die Antriebsvorrichtung 2 unterstützt, sondern erfolgt manuell in schwerkraftunterstützter Weise.

In einer anderen Applikation, dargestellt in Fig. 9A und 9B, kann die Antriebsvorrichtung 2 zum elektromotorisch unterstützten Verstellen eines Fahrzeugsitzes 11 zum Bereitstellen einer Easy-Entry-Funktion ausgestaltet sein. Der Fahrzeugsitz 11 ist in einer Normalgebrauchsstellung, dargestellt in Fig. 9A, an einer Bodenbaugruppe 15 angeordnet und über eine Arretierungsvorrichtung 151 in Form eines Verriegelungsschlosses im Bereich einer hinteren Abstützung des Fahrzeugsitzes 11 an der Bodenbaugruppe 15 arretiert. Zum Bereitstellen einer Easy-Entry-Funktion kann der Fahrzeugsitz 11 insgesamt in eine Bewegungsrichtung A1 vorverschwenkt werden, wobei zusätzlich gegebenenfalls auch die Rückenlehne 112 in eine Bewegungsrichtung A2 zu dem Sitzteil 111 im Rahmen der Easy-Entry-Funktion vorverschwenkt wird. Soll ein Zugang zu einer hinter dem Fahrzeugsitz 11 gelegenen Sitzreihe erleichtert werden, kann ein Nutzer auf den Fahrzeugsitz 11 zugreifen und diesen, wie im Übergang von Fig. 9A hin zu Fig. 9B ersichtlich, aus der Normalgebrauchsstellung in eine vorverlagerte Stellung bewegen, in der zum einen der Fahrzeugsitz 11 insgesamt um eine Schwenkachse 150 gegenüber der Bodenbaugruppe 15 verschwenkt und zudem die Rückenlehne 112 zu dem Sitzteil 111 bewegt ist.

Die Antriebsvorrichtung 2 kann hierbei zum Beispiel unterschiedliche Verstellantriebe 20 aufweisen, die jeweils im Servobetrieb betrieben werden können. Ein erster Verstellantrieb 20 kann zum Beispiel zum elektromotorisch unterstützten Verstellen des Fahrzeugsitzes 11 gegenüber der Bodenbaugruppe 15 ausgestaltet sein, während ein zweiter Verstellantrieb zum Beispiel zum elektromotorisch unterstützten Verstellen der Rückenlehne 112 gegenüber dem Sitzteil 111 ausgestaltet ist.

Der Fahrzeugsitz 11 und die Rückenlehne 112 können hierbei im Rahmen der Easy-Entry-Funktion zum Beispiel ausschließlich in gekoppelter, durch eine Kinematik vorgegebener Weise verstellbar sein. Alternativ können der Fahrzeugsitz 11 insgesamt und die Rückenlehne 112 gegenüber dem Sitzteil 111 in unabhängiger Weise verstellbar sein.

Eine Kinematik des Fahrzeugsitzes 11 zum Bereitstellen der Easy-Entry-Funktion kann beispielsweise ausgestaltet sein wie dies in der DE 10 2017 215 929 A1 beschrieben ist.

Der der Erfindung zugrunde liegende Gedanke ist nicht auf die vorangehend geschilderten Ausführungsbeispiele beschränkt, sondern lässt sich auch in anderer Weise verwirklichen.

Die Innenraumbaugruppe kann durch ganz unterschiedliche Baugruppen im Innenraum eines Fahrzeugs verwirklicht sein und ist insofern nicht auf einen Fahrzeugsitz oder ein Konsolenelement beschränkt. Bei einer Innenraumbaugruppe, die über eine Antriebsvorrichtung in einem Servobetrieb verstellt werden kann, kann es sich beispielsweise auch um einen Monitor, eine Ablage (zum Beispiel in Form eines Tisches oder dergleichen), eine Trennwand, ein Staufach oder dergleichen handeln.

Eine Steuerung im Servobetrieb ist nicht auf eine Stromregelung der beschriebenen Art beschränkt, sondern kann auch anders ausgestaltet sein.

**Bezugszeichenliste**

| | |
|---|---|
| 1 | Kraftfahrzeug |
| 10 | Fahrzeugkarosserie |
| 11 | Innenraumbaugruppe (Fahrzeugsitz) |
| 110 | Schwenkachse |
| 111 | Sitzteil |
| 112 | Rückenlehnenteil |
| 113-117 | Sensoreinrichtung |
| 118 | Sensoreinrichtung |
| 119 | Innenraumüberwachungssystem |
| 12 | Innenraumbaugruppe (Konsolenelement) |
| 13, 14 | Bedienelement |
| 15 | Bodenbaugruppe |
| 150 | Schwenkachse |
| 2 | Antriebsvorrichtung |
| 20 | Verstellantrieb (Motor) |
| 21 | Getriebe |
| 22 | Hemmungseinrichtung (Bremse) |
| 23 | Abtriebselement |

| | |
|---|---|
| 24 | Getriebeelement |
| 25 | Verstellbaugruppe |
| 3 | Steuereinrichtung |
| 30 | Lastberechnungsmodul |
| 301-303 | Sensoreinrichtung |
| 31 | Servoregelungsmodul |
| 310 | Ereigniserkennung |
| 32 | Drehzahlregelungsmodul |
| 320 | Drehzahleingabe |
| 33 | Schalteinrichtung |
| 330, 331 | Schaltpunkt |
| 34 | Stromregelungsmodul |
| 35 | PWM-Einheit |
| 36 | Steuermodul |
| $\alpha$ | Steigungswinkel der Fahrzeugvertikalachse |
| $\beta$ | Neigungswinkel der Fahrzeugvertikalachse |
| $\phi$ | Türöffnungswinkel |
| A1, A2 | Bewegungsrichtung |
| $I_{cmd}$ | Sollwert |
| n | Drehzahl |
| SP | Schwerpunkt |
| $U_{Bat}$ | Batteriespannung |
| $x_{SP}$ | Abstand Drehachse-Schwerpunkt |
| V | Schwenkrichtung |
| X | Fahrzeuglängsachse |
| Y | Fahrzeugquerachse |
| Z | Fahrzeugvertikalachse |

**Patentansprüche**

1. Antriebsvorrichtung (2) zum Verstellen einer Innenraumbaugruppe (11) eines Fahrzeugs (1), mit

   einem elektromotorischen Verstellantrieb (20) zum Verstellen der Innenraumbaugruppe (11) und einer Steuereinrichtung (3) zum Steuern des Verstellantriebs (20),
   wobei die Steuereinrichtung (3) ausgebildet ist, den Verstellantrieb (20) in einem Servobetrieb zum Bereitstellen einer unterstützenden Kraft bei einer manuellen Verstellung der Innenraumbaugruppe (11) durch einen Nutzer anzusteuern,
   **dadurch gekennzeichnet, dass** die Steuereinrichtung (3) ein Servoregelungsmodul (31) zum Bestimmen eines Sollwerts in Abhängigkeit von einer an der Innenraumbaugruppe (11) wirkenden Last aufweist.

2. Antriebsvorrichtung (2) nach Anspruch 1, **gekennzeichnet durch** eine Hemmungseinrichtung (22) zum Hemmen einer Verstellbewegung der Innenraumbaugruppe (11) in einer Sperrstellung, wobei die Steuereinrichtung (3) ausgebildet ist, die Hemmungseinrichtung (22) aus der Sperrstellung zum Verstellen der Innenraumbaugruppe (11) in eine nicht gesperrte Stellung zu überführen.

3. Antriebsvorrichtung (2) nach Anspruch 1 oder 2, **gekennzeichnet durch** ein mit dem Verstellantrieb (20) wirkverbundenes Abtriebselement (23), wobei die Hemmungseinrichtung (22) mit dem Abtriebselement (23) wirkverbunden ist, um das Abtriebselement (23) in der Sperrstellung gegen ein Verstellen zu sperren und in der nicht gesperrten Stellung zum Verstellen freizugeben.

4. Antriebsvorrichtung (2) nach einem der Ansprüche 1 bis 3, **dadurch gekennzeichnet, dass** die Innenraumbaugruppe (11) ein Fahrzeugsitz oder eine Baugruppe (111, 112) eines Fahrzeugsitzes ist.

5. Antriebsvorrichtung (2) nach einem der vorangehenden Ansprüche, **dadurch gekennzeichnet, dass** die Innenraumbaugruppe (11) um eine Schwenkachse (110) verschwenkbar und/oder entlang einer Längsrichtung (X, Y, Z) verschiebbar ist.

6. Antriebsvorrichtung (2) nach einem der vorangehenden Ansprüche, **dadurch gekennzeichnet, dass** die Innenraumbaugruppe (11) ein Bedienelement (113) aufweist, das durch einen Nutzer zum Verstellen der Innenraumbaugruppe (11) betätigbar ist.

7. Antriebsvorrichtung (2) nach einem der vorangehenden Ansprüche, **dadurch gekennzeichnet, dass** die Innenraumbaugruppe (11) eine Sensoreinrichtung (118) zum Erfassen einer Berührung, einer Annäherung, einer Beschleunigung und/oder einer Bewegungsgeschwindigkeit an der Innenraumbaugruppe (11) aufweist, wobei die Steuereinrichtung (3) ausgebildet ist, ein Erfassungssignal der Sensoreinrichtung (118) zum Erkennen eines Verstellwunsches eines Nutzers auszuwerten.

8. Antriebsvorrichtung (2) nach einem der vorangehenden Ansprüche, **dadurch gekennzeichnet, dass** die Steuereinrichtung (3) ausgebildet ist, ein Erfassungssignal zum Erkennen einer vorbestimmten Geste auszuwerten und bei Erkennen der vorbestimmten Geste auf einen Verstellwunsch zu schließen.

9. Antriebsvorrichtung (2) nach einem der vorangehenden Ansprüche, **dadurch gekennzeichnet, dass** die Steuereinrichtung (3) ausgebildet ist, einen Verstellmodus zum Verstellen der Innenraumbaugruppe (11) im Servobetrieb in Abhängigkeit von zumindest einem Triggerkriterium zu aktivieren.

10. Antriebsvorrichtung (2) nach Anspruch 9, **dadurch gekennzeichnet, dass** die Steuereinrichtung (3) ausgebildet ist, als Triggerkriterium einen Belegungszustand der Innenraumbaugruppe (11), einen Öffnungszustand einer Fahrzeugtür oder einen Fahrzustand des Fahrzeugs (1) auszuwerten

11. Antriebsvorrichtung (2) nach Anspruch 9 oder 10, **dadurch gekennzeichnet, dass** die Steuereinrichung (3) ausgebildet ist, den Verstellantrieb (20) in dem Verstellmodus zum Bereitstellen einer unterstützenden Kraft bei einer manuellen Verstellung der Innenraumbaugruppe (11) durch einen Nutzer anzusteuern, wenn nach dem Aktivieren des Verstellmodus ein Verstellwunsch eines Nutzers erkannt wird.

12. Antriebsvorrichtung (2) nach einem der vorangehenden Ansprüche, **dadurch gekennzeichnet, dass** die Steuereinrichtung (3) ein Stromregelungsmodul (34) zum Regeln eines Stroms des Verstellantriebs (20) aufweist, wobei das Stromregelungsmodul (34) ausgebildet ist, den Strom des Verstellantriebs (20) anhand des von dem Servoregelungsmodul (31) zugeführten Sollwerts zu regeln.

13. Antriebsvorrichtung (2) nach einem der vorangehenden Ansprüche, **dadurch gekennzeichnet, dass** die Steuereinrichtung (3) ein Lastberechnungsmodul (30) aufweist, das ausgebildet ist, eine an der Innenraumbaugruppe (11) wirkende Last in Abhängigkeit von einem um eine Fahrzeuglängsachse (X) gemessenen Neigungswinkel ($\beta2$) des Fahrzeugs (1), einem um die Fahrzeuglängsachse (X) gemessenen Neigungswinkel ($\beta1$) einer Schwenkachse (110) der Innenraumbaugruppe (11), einem um eine Fahrzeugquerachse (Y) gemessenen Steigungswinkel ($\alpha2$) des Fahrzeugs (1), einem um die Fahrzeugquerachse (Y) gemessenen Steigungswinkel ($\alpha1$) der Schwenkachse (110) der Innenraumbaugruppe (11) und/oder einer Stellung ($\phi$) der Innenraumbaugruppe (11) zu bestimmen.

14. Antriebsvorrichtung (2) nach einem der vorangehenden Ansprüche, **dadurch gekennzeichnet, dass** das Servoregelungsmodul (31) ausgebildet ist, anhand einer an der Innenraumbaugruppe (11) wirkenden Last und eines von einem Nutzer aufzubringenden Zielkraftwerts eine durch den Verstellantrieb (20) bereitzustellende Sollkraft zu bestimmen.

15. Antriebsvorrichtung (2) nach Anspruch 14, **dadurch gekennzeichnet, dass** die an der Innenraumbaugruppe (11) wirkenden Last bestimmt wird anhand einer an der Innenraumbaugruppe (11) wirkenden, statischen Lastkraft und einer an der Innenraumbaugruppe (11) wirkenden, dynamischen Lastkraft.

**Claims**

1. A drive device (2) for adjusting an interior assembly (11) of a vehicle (1), comprising

    an electromotive adjusting drive (20) for adjusting the interior assembly (11) and a control device (3) for controlling the adjusting drive (20),
    wherein the control device (3) is configured to actuate the adjusting drive (20) in a servo mode to provide a supporting force during a manual adjustment of the interior assembly (11) by a user,
    **characterized in that** the control device (3) includes a servo control module (31) for determining a setpoint in dependence on a load acting on the interior assembly (11).

2. The drive device (2) according to claim 1, **characterized by** an inhibiting device (22) for inhibiting an adjusting movement of the interior assembly (11) in a blocking position, wherein the control device (3) is configured to transfer the inhibiting device (22) from the blocking position into a non-blocked position for adjusting the interior assembly (11).

3. The drive device (2) according to claim 1 or 2, **characterized by** an output element (23) operatively connected to the adjusting drive (20), wherein the inhibiting device (22) is operatively connected to the output element (23) in order to block the output element (23) in the blocking position against an adjustment and to release the same for an adjustment in the non-blocked position.

4. The drive device (2) according to any of claims 1 to 3, **characterized in that** the interior assembly (11) is a vehicle seat or an assembly (111, 112) of a vehicle seat.

5. The drive device (2) according to any of the preceding claims, **characterized in that** the interior assembly (11) is pivotable about a pivot axis (110) and/or shiftable along a longitudinal direction (X, Y, Z).

6. The drive device (2) according to any of the preceding claims, **characterized in that** the interior assembly (11) includes an operating element (113) which can be actuated by a user for adjusting the interior assembly (11).

7. The drive device (2) according to any of the preceding claims, **characterized in that** the interior assembly (11) includes a sensor device (118) for detecting a touch, an approach, an acceleration and/or a speed of movement at the interior assembly (11), wherein the control device (3) is configured to evaluate a detection signal of the sensor device (118) for recognizing an adjustment request of a user.

8. The drive device (2) according to any of the preceding claims, **characterized in that** the control device (3) is configured to evaluate a detection signal for recognizing a predetermined gesture and infer an adjustment request on recognition of the predetermined gesture.

9. The drive device (2) according to any of the preceding claims, **characterized in that** the control device (3) is configured to activate an adjusting mode for adjusting the interior assembly (11) in the servo mode in dependence on at least one trigger criterion.

10. The drive device (2) according to claim 9, **characterized in that** the control device (3) is configured to evaluate an occupancy state of the interior assembly (11), an opening state of a vehicle door or a driving state of the vehicle (1) as a trigger criterion.

11. The drive device (2) according to claim 9 or 10, **characterized in that** the control device (3) is configured to actuate the adjusting drive (20) in the adjusting mode to provide a supporting force during a manual adjustment of the interior assembly (11) by a user, when after activation of the adjusting mode an adjustment request of a user is recognized.

12. The drive device (2) according to any of the preceding claims, **characterized in that** the control device (3) includes a current regulation module (34) for regulating a current of the adjusting drive (20), wherein the current regulation module (34) is configured to regulate the current of the adjusting drive (20) with reference to the setpoint supplied by the servo control module (31).

13. The drive device (2) according to any of the preceding claims, **characterized in that** the control device (3) includes a load calculation module (30) that is configured to determine a load acting on the interior assembly (11) in dependence on an inclination angle ($\beta2$) of the vehicle (1), which is measured about a longitudinal vehicle axis (X), an inclination angle ($\beta1$) of a pivot axis (110) of the interior assembly (11), which is measured about the longitudinal vehicle axis (X), a slope angle ($\alpha2$) of the vehicle (1), which is measured about the transverse vehicle axis (Y), a slope angle ($\alpha1$) of the pivot axis (110) of the interior assembly (11), which is measured about the transverse vehicle axis (Y), and/or a position ($\phi$) of the interior assembly (11).

14. The drive device (2) according to any of the preceding claims, **characterized in that** the servo control module (31) is configured to determine a setpoint force to be provided by the adjusting drive (20) with reference to a load acting on the interior assembly (11) and a target force value to be applied by a user.

**15.** The drive device (2) according to claim 14, **characterized in that** the load acting on the interior assembly (11) is determined with reference to a static load force acting on the interior assembly (11) and a dynamic load force acting on the interior assembly (11).

**Revendications**

**1.** Dispositif d'entraînement (2) pour ajuster un ensemble intérieur (11) d'un véhicule (1), comprenant

un entraînement d'ajustement (20) à moteur électrique pour ajuster l'ensemble intérieur (11) et un dispositif de commande (3) pour commander l'entraînement d'ajustement (20),
le dispositif de commande (3) étant conçu pour actionner l'entraînement d'ajustement (20) dans un mode d'asservissement pour fournir une force d'assistance lors d'un ajustement manuel de l'ensemble intérieur (11) par un utilisateur,
**caractérisé en ce que** le dispositif de commande (3) présente un module de servocommande (31) pour déterminer une valeur de consigne en dépendance d'une charge agissant sur l'ensemble intérieur (11).

**2.** Dispositif d'entraînement (2) selon la revendication 1, **caractérisé par** un dispositif d'inhibition (22) pour inhiber un mouvement d'ajustement de l'ensemble intérieur (11) dans une position de blocage, le dispositif de commande (3) étant conçu pour faire passer le dispositif d'inhibition (22) de la position de blocage dans une position non bloquée pour ajuster l'ensemble intérieur (11).

**3.** Dispositif d'entraînement (2) selon la revendication 1 ou 2, **caractérisé par** un élément de sortie (23) relié fonctionnellement à l'entraînement d'ajustement (20), le dispositif d'inhibition (22) étant relié fonctionnellement à l'élément de sortie (23) afin de bloquer l'élément de sortie (23) dans la position de blocage contre un ajustement et de le libérer pour l'ajustement dans la position non bloquée.

**4.** Dispositif d'entraînement (2) selon l'une quelconque des revendications 1 à 3, **caractérisé en ce que** l'ensemble intérieur (11) est un siège de véhicule ou un ensemble (111, 112) d'un siège de véhicule.

**5.** Dispositif d'entraînement (2) selon l'une quelconque des revendications précédentes, **caractérisé en ce que** l'ensemble intérieur (11) peut pivoter autour d'un axe de pivotement (110) et/ou coulisser le long d'une direction longitudinale (X, Y, Z).

**6.** Dispositif d'entraînement (2) selon l'une quelconque des revendications précédentes, **caractérisé en ce que** l'ensemble intérieur (11) présente un élément d'actionnement (113), qui peut être actionner par un utilisateur pour ajuster l'ensemble intérieur (11).

**7.** Dispositif d'entraînement (2) selon l'une quelconque des revendications précédentes, **caractérisé en ce que** l'ensemble intérieur (11) présente un dispositif capteur (118) pour détecter un contact, un rapprochement, une accélération et/ou une vitesse de déplacement sur l'ensemble intérieur (11), le dispositif de commande (3) étant conçu pour évaluer un signal de détection du dispositif capteur (118) pour reconnaître un souhait d'ajustement d'un utilisateur.

**8.** Dispositif d'entraînement (2) selon l'une quelconque des revendications précédentes, **caractérisé en ce que** le dispositif de commande (3) est conçu pour évaluer un signal de détection pour reconnaître un geste prédéterminé et pour conclure à un souhait d'ajustement en cas de reconnaissance du geste prédéterminé.

**9.** Dispositif d'entraînement (2) selon l'une quelconque des revendications précédentes, **caractérisé en ce que** le dispositif de commande (3) est conçu pour activer un mode d'ajustement pour ajuster l'ensemble intérieur (11) en mode d'asservissement en dépendance d'au moins un critère de déclenchement.

**10.** Dispositif d'entraînement (2) selon la revendication 9, **caractérisé en ce que** le dispositif de commande (3) est conçu pour évaluer comme critère de déclenchement un état d'occupation de l'ensemble intérieur (11), un état d'ouverture d'une porte de véhicule ou un état de marche du véhicule (1).

**11.** Dispositif d'entraînement (2) selon la revendication 9 ou 10, **caractérisé en ce que** le dispositif de commande (3) est conçu pour actionner l'entraînement d'ajustement (20) dans le mode d'ajustement pour fournir une force d'assistance lors d'un ajustement manuel de l'ensemble intérieur (11) par un utilisateur, lorsqu'un souhait d'ajustement d'un utilisateur est reconnu après l'activation du mode d'ajustement.

12. Dispositif d'entraînement (2) selon l'une quelconque des revendications précédentes, **caractérisé en ce que** le dispositif de commande (3) présente un module de régulation de courant (34) pour réguler un courant de l'entraînement d'ajustement (20), le module de régulation de courant (34) étant conçu pour réguler le courant de l'entraînement d'ajustement (20) à l'aide de la valeur de consigne amenée par le module de servocommande (31).

13. Dispositif d'entraînement (2) selon l'une quelconque des revendications précédentes, **caractérisé en ce que** le dispositif de commande (3) présente un module de calcul de charge (30) qui est conçu pour calculer une charge agissant sur l'ensemble intérieur (11) en dépendance d'un angle d'inclinaison ($\beta2$) du véhicule (1) mesuré autour d'un axe longitudinal (X) du véhicule, d'un angle d'inclinaison ($\beta1$) d'un axe de pivotement (110) de l'ensemble intérieur (11), mesuré autour de l'axe longitudinal (X) du véhicule, d'un angle de pente ($\alpha2$) du véhicule (1), mesuré autour d'un axe transversal (Y) du véhicule, d'un angle de pente ($\alpha1$) de l'axe de pivotement (110) de l'ensemble intérieur (11), mesuré autour de l'axe transversal (Y) du véhicule, et/ou d'une position ($\phi$) de l'ensemble intérieur (11).

14. Dispositif d'entraînement (2) selon l'une quelconque des revendications précédentes, **caractérisé en ce que** le module de servocommande (31) est conçu pour déterminer, à l'aide d'une charge agissant sur l'ensemble intérieur (11) et d'une valeur de force cible à appliquer par un utilisateur, une force de consigne à fournir par l'entraînement d'ajustement (20).

15. Dispositif d'entraînement (2) selon la revendication 14, **caractérisé en ce que** la charge agissant sur l'ensemble intérieur (11) est déterminée à l'aide d'une force de charge statique agissant sur l'ensemble intérieur (11) et d'une force de charge dynamique agissant sur l'ensemble intérieur (11).

FIG 1

FIG 2

# FIG 3A

# FIG 3B

## FIG 4

## FIG 5

# FIG 6

# FIG 7

FIG 8

11

V'

112'

V

111

112

3

2

110

FIG 9A

11

3

2

112

111

110

150

15

151

FIG 9B

A2

112

11

110

151

111

A1

15

150

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170166089 A1
- DE 19853156 A1
- EP 1078808 A1
- EP 1535768 A2
- DE 102014119628 A1
- DE 102017215929 A1